# EUROPÄISCHE PATENTSCHRIFT

(11) **EP 2 428 403 B1**
(45) Veröffentlichungstag und Bekanntmachung des Hinweises auf die Patenterteilung: **15.01.2014**
(21) Anmeldenummer: 11007268.3
(22) Anmeldetag: 07.09.2011
(51) Int. Cl.: B60R 9/06, B60D 1/62, B60D 1/64, B60D 1/06, B60D 1/52, B60R 9/08, B60R 19/48, B60R 19/50

(54) **Kupplung für ein Lastenträger-System mit einer Kontakteinheit**
Coupling for a load carrier system with a contact unit
Couplage pour un système de support de charge doté d'une unité de contact

(30) Priorität: 13.09.2010 DE 102010045104; 11.02.2011 DE 202011002669 U; 14.07.2011 DE 202011103344 U
(43) Veröffentlichungstag der Anmeldung: 14.03.2012
(73) Patentinhaber: WESTFALIA - Automotive GmbH, 33378 Rheda-Wiedenbrück (DE)
(72) Erfinder: Becker, Wilfried, 33397 Rietberg (DE); Beutin, Jörg, 33334 Gütersloh (DE); Hils, Fabian, 33161 Hövelhof (DE)
(74) Vertreter: Bregenzer, Michael

(56) Entgegenhaltungen:
- EP-A1- 0 747 244
- DE-A1-102007 043 126
- GB-A- 2 363 262

## Beschreibung

Die Erfindung betrifft eine Kupplung für ein Lastenträger-System für ein Kraftfahrzeug, mit einer Fahrzeug-Halterung zur Befestigung an einem Heck des Kraftfahrzeugs und mit einem zur Befestigung an der Fahrzeug-Halterung vorgesehenen Befestigungsarm eines Lastenträgers, der einen Tragbereich zum Tragen einer Last aufweist, von dem der Befestigungsarm zur Befestigung an der Fahrzeug-Halterung absteht, wobei an der mindestens einen Fahrzeug-Halterung und dem mindestens einen Befestigungsarm Steckmittel zum Anstecken des mindestens einen Befestigungsarms an die mindestens eine Fahrzeug-Halterung entlang einer Steckachse vorgesehen sind, wobei die Steckmittel eine Steckaufnahme und einen Steckvorsprung umfassen, an denen eine Fahrzeug-Kontakte umfassende Fahrzeug-Kontakteinheit der Fahrzeug-Halterung und eine Lastenträger-Kontakte umfassende Lastenträger-Kontakteinheit des Lastenträgers zur Herstellung einer elektrischen und/oder optischen Verbindung zwischen dem Kraftfahrzeug und dem Lastenträger vorgesehen sind.

Eine derartige Kupplung für ein Lastträgersystem ist beispielsweise aus EP 1 757 488 A2 bekannt. Durch ein einfaches Anstecken des Lastenträgers an die Fahrzeug-Halterung, wobei am einen Teil eine Steckaufnahme, am anderen Teil ein Steckvorsprung vorgesehen ist, ist eine Montage möglich.

Bei einem solchen Lastenträger-System ist es schwierig, zusätzlich zur mechanischen Verbindung zwischen Lastenträger und Fahrzeug eine zuverlässige elektrische Verbindung herzustellen.

Zwar werden die elektrischen Kontakte üblicherweise direkt beim Anstecken hergestellt. Allerdings müssen äußerst geringe Toleranzen eingehalten werden, damit beispielsweise elektrische Steckkontakte in elektrische Steckbuchsen hineinpassen.

Eine weitere Kupplung mit einer Kontakteinheit gemäß den Oberbegriff des Anspruchs 1 und 15 ist in DE 102007043126A1 beschrieben.

Es ist daher die Aufgabe der vorliegenden Erfindung, ein verbessertes elektrisches und/oder optisches Verbindungskonzept für eine Lastenträger-Kupplung bereitzustellen.

Zur Lösung dieser Aufgabe ist bei einer Kupplung der eingangs genannten Art vorgesehen, dass sie Befestigungsmittel zum Befestigen der Fahrzeug-Kontakte an der Fahrzeug-Halterung und/oder Lastenträger-Kontakte an dem Befestigungsarm mit einem Spiel längs und/oder quer zu der Steckachse aufweist.

Im Sinne der Erfindung ist es auch, wenn die vorgenannten Komponenten, zum Beispiel die Führungsmittel, die schwimmende Lagerung und dergleichen, an einer Kontakteinheit vorgesehen sind, die zur späteren Montage an einer Kupplung eines Lastenträger-Systems vorgesehen ist.

Die Lastenträger-Kontakte und/oder die Fahrzeug-Kontakte sind sozusagen schwimmend gelagert, so dass gegebenenfalls vorhandene Toleranzen bzw. Maßabweichungen zwischen der Fahrzeug-Halterung und dem Befestigungsarm, insbesondere dem Steckvorsprung und der Steckaufnahme, ausgeglichen werden.

Bevorzugt sind die Lastenträger-Kontakte der Lastenträger-Kontakteinheit oder auch die Fahrzeug-Kontakte der Fahrzeug-Kontakteinheit jeweils gemeinsam an einem Kontaktträger angeordnet oder auch in einem Gehäuse. Selbstverständlich kann im Gehäuse auch ein Kontaktträger für die jeweiligen Kontakte vorgesehen sein. Bevorzugt ist es, wenn beide Kontaktgruppen, d.h. die Fahrzeug-Kontakte und die Lastenträger-Kontakte, jeweils an einem Kontaktträger oder in einem Gehäuse angeordnet sind.

Dabei ist es möglich, dass die Kontakte an dem Kontaktträger oder im Gehäuse mit zumindest einem Teil des Spiels längs und/oder quer zu der Steckachse gehaltert oder aufgenommen sind. Somit sind also die Kontakte bereits zu einem Toleranzausgleich ausgestaltet.

Beispielsweise können die Fahrzeug-Kontakte mindestens einen Steckvorsprung und die Lastenträger-Kontakte mindestens eine Steckbuchse umfassen und/oder die Fahrzeug-Kontakte mindestens eine Steckbuchse und die Lastenträger-Kontakte mindestens einen Steckvorsprung umfassen. Weiter können auch z.B. federnde Kontakte, feste Kontaktflächen oder dergleichen als Fahrzeug-Kontakte oder Lastenträger-Kontakte vorgesehen sein.

Eine Ausführungsform der Erfindung kann dabei vorsehen, dass die Fahrzeug-Kontakte oder die Lastenträger-Kontakte an einem Kontaktträger angeordnet sind, der seinerseits wiederum in einem Gehäuse aufgenommen ist. Ein Spiel zwischen dem jeweiligen Kontaktträger und dem Gehäuse bildet vorzugsweise mindestens ein Teil des Spiels oder das ganze Spiel, das die Lastenträger-Kontakte bezüglich des Befestigungsarms und/oder die Fahrzeug-Kontakte bezüglich der Fahrzeug-Halterung haben. Selbstverständlich ist es möglich, dass auch die jeweiligen Kontakte am Kontaktträger noch ein weiteres Spiel aufweisen.

Der Kontaktträger oder das Gehäuse weisen zweckmäßigerweise einen Deckel auf, durch den zu den jeweiligen Fahrzeug-Kontakten oder Lastenträger-Kontakten führende Leitungen, insbesondere sämtliche Leitungen, hindurchgeführt sind. An dem Deckel ist beispielsweise eine Tülle, ein Abknickschutz oder dergleichen, vorgesehen.

Der Deckel ist zweckmäßigerweise mit dem Kontaktträger und/oder dem Gehäuse verrastet. Beispielsweise ist ein Rasthalter vorgesehen, der an einer von den Kontakten abgewandten Rückseite des Deckels an diesem anliegt, diesen sozusagen abstützt, und von dem mindestens 2 Rasthaken abstehen. Die Rasthaken stehen beispielsweise nach vorn, vor eine Vorderseite des Deckels vor, so dass sie in das Gehäuse eingreifen können. Es versteht sich, dass die Rasthaken auch seitlich in das Gehäuse neben dem Deckel eingreifen können, beispielsweise wenn der Deckel in einer Aufnahme des Gehäuses aufgenommen ist.

Eine geschützte Anordnung der Fahrzeug-Kontakte und Lastenträger-Kontakte sieht vor, dass sie in einem Innenraum der Fahrzeug-Halterung und des Befestigungsarms angeordnet sind, so dass sie eingehaust sind, wenn der Befestigungsarm an der Fahrzeug-Halterung befestigt ist. Somit bilden also die Fahrzeug-Halterung und/oder der Befestigungsarm beispielsweise ein Schutzgehäuse für die Lastenträger-Kontakte bzw. die Fahrzeug-Kontakte, wenn das System im Einsatz ist.

Insbesondere bei dieser geschützten Konfiguration ist es vorteilhaft, wenn der erfindungsgemäße Spielausgleich vorhanden ist. Die Steckaufnahme und der Steckvorsprung passen in der Regel formschlüssig zueinander, wobei die Maßtoleranzen insbesondere des Steckvorsprung auf dessen Außenkontur optimiert sind, während die Innenkontur maßliche Abweichungen relativ zu Außenkontur aufweisen kann. Wenn nun die im Steckvorsprung angeordneten Kontakte relativ zur Innenkontur mit einem vorbestimmten Maß beabstandet sind, besteht das Problem, dass sie nicht in die an der Steckaufnahme angeordneten Kontakte passen. Auch in einem solchen Fall schaffen die nachfolgend erläuterten Maßnahmen Abhilfe:

Die Befestigungsmittel umfassen beispielsweise einen Haltevorsprung, der vor eine Wand der Steckaufnahme oder des Steckvorsprungs in den jeweiligen Innenraum vorsteht und in eine Halteaufnahme der Fahrzeug-Kontakteinheit oder der Lastenträger-Kontakteinheit mit einem Spiel längs und/oder quer zu der Steckachse eingreift. Beispielsweise ist die Halteaufnahme als ein Langloch ausgestaltet und/oder hat eine größere Weite, insbesondere einen größeren Durchmesser, als der Haltevorsprung. Der Haltevorsprung umfasst beispielsweise eine Schraube oder einen Steckbolzen, der die Wand der Steckaufnahme oder des Steckvorsprungs durchdringt oder in diese Wand eindringt. Der Haltevorsprung ist beispielsweise durch Fixiermittel, insbesondere Klebstoff, Lack oder dergleichen, ortsfest, insbesondere zugfest und/oder schubfest und/oder drehfest, an der Wand der Steckaufnahme oder des Steckvorsprungs festgelegt. Wenn also beispielsweise eine Schraube in die Wand eingeschraubt ist, wird sie durch die Fixiermittel ortsfest festgelegt, so dass sie unverlierbar ist.

Der Steckvorsprung oder die Steckaufnahme umfassen beispielsweise einen Rohrabschnitt, zum Beispiel einen runden Rohrabschnitt, einen polygonalen oder dergleichen, wobei die Fahrzeug-Kontakteinheit oder die Lastenträger-Kontakteinheit an einem Innenumfang des jeweiligen Rohr Rohrabschnitt dichtend anliegen und diesen im Querschnitt, z.B. stirnseitig, verschließen. Somit wird also beispielsweise der von der Kontakteinheit abgewandte Bereich des Rohrabschnitt des durch die jeweilige Kontakteinheit vor Umwelteinflüssen geschützt.

Die Kontakteinheiten können beispielsweise mit einer Dichtungsanordnung oder einer Dichtung, insbesondere einer Ringdichtung, versehen sein. Die Dichtungsanordnung oder die (Ring-)Dichtung liegt einem Innenumfang des jeweiligen Rohrabschnitts an.

Bevorzugt ist ein Reibschluss-Befestigungskonzept: die Befestigungsmittel umfassen zweckmäßigerweise mindestens eine, beispielsweise durch die Dichtung gebildete oder als Dichtung ausgestaltete, Reibschlussfläche zum reibschlüssigen Halt der Fahrzeug-Kontakteinheit an der Fahrzeug-Halterung und/oder der Lastenträger-Kontakteinheit an dem Befestigungsarm mit einem Spiel längs und/oder quer zu der Steckachse. Beispielsweise liegt die jeweilige Kontakteinheit mit der Reibschlussfläche am Steckvorsprung oder der Steckaufnahme, insbesondere deren jeweiligen Innenumfang, an. Selbstverständlich könnte auch beispielsweise ein Gehäuse der Kontakteinheit, der Kontaktträger oder eine sonstige Komponente mit beispielsweise eine reibschlüssigen Beschichtung versehen sein oder aus einem reibschlüssigen Material, zumindest abschnittsweise, bestehen.

Die Fahrzeug-Kontakte und/oder die Lastenträger-Kontakte sind zweckmäßigerweise mittels eines elastischen Körpers mit einem Spiel längs und/oder quer zu der Steckachse aufgenommen. Der elastische Körper kann beispielsweise ein Kontaktträger sein, der die einzelnen Kontakte (Steckkontakte oder Steckbuchsen), trägt. Der Kontaktträger besteht beispielsweise aus Gummi oder einem elastischen Kunststoff. Bevorzugt wird der elastische Körper von einer Dichtung gebildet, die die jeweilige Kontakteinheit umgibt.

Weiterhin ist es vorteilhaft, wenn die jeweilige Kontakteinheit durch eine Federanordnung, zum Beispiel mindestens eine Schraubenfeder, ein Tellerfederpaket, einen Federpufferkörper oder dergleichen, zur jeweils anderen Kontakteinheit und/oder in Richtung einer Mittelposition quer zur Steckachse belastet ist. Die Federanordnung ist nachgiebig, wenn die eine Kontakteinheit in die andere Kontakteinheit eingesteckt wird.

Auch ein Klemmkonzept ist möglich, mit dem die Fahrzeug-Kontakteinheit oder die Lastenträger-Kontakteinheit am sie jeweils haltenden Bauteil, zum Beispiel der Fahrzeug-Halterung oder dem Befestigungsarm, befestigbar sind. Beispielsweise dienen die Klemmmittel zum Verklemmen in der Steckaufnahme oder dem Steckvorsprung. Jedenfalls ist es vorteilhaft, wenn die Klemmmittel ein Spiel der jeweiligen Kontakteinheit relativ zum sie haltenden Bauteil (Fahrzeug-Halterung oder Befestigungsarm) längs und/oder quer zu der Steckachse ermöglichen.

Die Klemmmittel umfassen beispielsweise einen Klemmvorsprung, der eine am Außenumfang der Fahrzeug-Kontakteinheit oder der Lastenträger-Kontakteinheit angeordnete Dichtung oder die Stützfläche in Richtung eines Innenumfangs der Steckaufnahme oder des Steckvorsprung belastet.

Weiterhin kann zumindest ein Teil des Spiels der Kontakte längs und/oder quer zu der Steckachse auch durch Rastmittel erzielt werden: die Befestigungsmittel umfassen zweckmäßigerweise Rastmittel zum Verrasten der jeweiligen Kontakteinheit am haltenden Bauteil (Fahrzeug-Halterung oder Befestigungsarm), beispielsweise der Steckaufnahme oder dem Steckvorsprung mit zumindest einem Teil dieses Bewegungsspiels. Beispielsweise rastet ein Rastvorsprung am einen Bauteil in eine Rastaufnahme am andern Bauteil, insbesondere innen an der Steckaufnahme oder am Steckvorsprung, mit einem Bewegungsspiel längs und/oder quer zu der Steckachse ein.

In Verbindung mit dem vorgenannten Klemmkonzept und/oder dem Reibschluss-Konzept ist also durch den Halt mittels des Haltevorsprungs oder der Verrastung ein relativ fester Halt der jeweiligen Kontakte am Befestigungsarm oder der Fahrzeug-Halterung möglich, wobei dennoch das erfindungsgemäße Spiel längs und/oder quer zu der Steckachse erzielbar ist.

Ein an sich eigenständiges Konzept, bei dem es nicht unbedingt auf den an sich vorteilhaften Spielausgleich der Kontakte relativ zueinander, eine Führung oder dergleichen ankommt, das also in Verbindung mit einer Kupplung gemäß dem Oberbegriff des Anspruchs 1 oder einer Kontakteinheit gemäß dem Oberbegriff des Anspruchs 15 realisierbar ist, stellt es dar, wenn eine Kontakteinheit eines Lastenträgers und/oder einer Fahrzeug-Halterung, die elektrische und/oder optische Kontakte aufweist, die beim Anstecken eines Lastenträgers an das Fahrzeug bzw. die fahrzeugseitige Halterung mit elektrischen und/oder optischen Gegen-Kontakten in Verbindung treten, insbesondere integral ein Steuergerät umfasst oder an einem Steuergerät angeordnet ist oder ein Steuergerät aufweist, das elektronische Komponenten und/oder einen Mikroprozessor und/oder einen Buskoppler zur Anbindung an einen Bus des Fahrzeugs oder des Lastenträgers oder auch zur Kommunikation zwischen dem Fahrzeug und dem Lastenträger umfasst. Das Steuergerät kann beispielsweise die Kommunikation mit einem Bordnetz des Fahrzeugs herstellen. Das Steuergerät kann aber auch zur Steuerung von Funktionen des Lastenträgers, zum Beispiel Ansteuerung von Leuchten, Abstandssensoren oder dergleichen, dienen.

Eine schwimmende Lagerung einer Kontakteinheit und/oder die Verwendung einer Kontakteinheit mit einem polygonalen Außenumfang in einem Innenraum einer Steckaufnahme oder eines Steckvorsprungs kann selbstverständlich auch bei einer Kupplung vorteilhaft sein, bei der ein Arm oder ein sonstiges Bauteil mit einem Steckvorsprung oder einer Steckaufnahme einer Anhängekupplung an der Fahrzeug-Halterung befestigt werden soll.

Die Kupplung oder die Kontakteinheit kann z.B. einen Bestandteil einer Anhängekupplung bilden, bei der ein Kupplungsarm der Anhängekupplung und die Fahrzeug-Halterung aneinander ansteckbar sind. Der Kupplungsarm weist an seinem freien Ende vorteilhaft ein Kuppelstück für einen Anhänger, insbesondere einen Kugelkopf, auf. Wenn der Kupplungsarm an die Fahrzeug-Halterung angesteckt ist, z.B. in oder auf die Fahrzeug-Halterung gesteckt ist, ist eine elektrische und/oder optische Verbindung zwischen dem Kraftfahrzeug bzw. der Fahrzeug-Halterung und dem Kupplungsarm vorhanden. An dem Kupplungsarm ist zweckmäßigerweise eine Kontakteinheit, z.B. eine Anhängersteckdose, für den Anhänger vorhanden. Die Erfindung kann also auch eine Anhängekupplung umfassen, die mit einer erfindungsgemäßen Kupplung bzw. mit einer erfindungsgemäßen Kontakteinheit ausgestattet ist.

Ein bevorzugtes Konzept der Erfindung sieht vor, dass zusätzliche Führungsmittel die Fahrzeug-Kontakteinheit relativ zur Lastenträger-Kontakteinheit oder umgekehrt führen, wenn der Befestigungsarm an oder in die Fahrzeug-Halterung gesteckt wird. Die Fahrzeug-Kontakteinheit und die Lastenträger-Kontakteinheit finden also anhand der Führungsmittel quasi zueinander. Dies hat den Vorteil, dass Toleranzen, die zwischen der Fahrzeug-Halterung und dem Befestigungsarm vorhanden sein können, zum einen durch das Spiel der jeweiligen Kontakteinheit ausgeglichen werden können, zum andern aber auch die Kontakte nicht verbogen werden, wenn der Spielausgleich erfolgt.

Vorzugsweise ist vorgesehen, dass die Führungsmittel eine oder mehrere Gleitrippen, Führungsvorsprünge oder dergleichen umfassen. Beispielsweise ist eine Gleitrippe an einem Außenumfang der Fahrzeug-Kontakteinheit und/oder an einem Außenumfang der Lastenträger-Kontakteinheit vorhanden. Selbstverständlich kann eine Gleitrippe oder ein Führungsvorsprung auch an einem Gehäuse der Fahrzeug-Kontakteinheit oder der Lastenträger-Kontakteinheit und/oder an der Fahrzeug-Halterung und an dem Befestigungsarm angeordnet sein.

Bevorzugt stützen sich derartige Führungsvorsprünge oder Gleitrippen an dem Befestigungsarms oder der Fahrzeug-Halterung (oder beiden) ab, wenn der Befestigungsarm an die Fahrzeug-Halterung angesteckt wird, zum Beispiel wenn die beiden Bauteile ineinander gesteckt werden.

Ein Führungsvorsprung oder eine Gleitrippe kann beispielsweise derart ausgestaltet sein, dass sie die jeweilige Kontakteinheit am Innenumfang des Befestigungsarm oder der Fahrzeug-Halterung führt. Es ist aber auch vorteilhaft, wenn die Führungsmittel die Kontakteinheiten aneinander führen.

Weiterhin ist es möglich, dass beispielsweise am Innenumfang des Befestigungsarms oder der Fahrzeug-Halterung (oder beiden) ein Führungsvorsprung oder eine Gleitrippe oder sonstige Führungsmittel vorgesehen sind, die die Kontakteinheiten zueinander hin führen. Mithin müssen also die Führungsmittel nicht unbedingt an den Kontakteinheiten vorgesehen sein, was vorteilhaft ist, sondern können auch am Befestigungsarm oder der Fahrzeug-Halterung vorgesehen sein.

Eine vorteilhafte Ausführungsform der Erfindung sieht vor, dass ein Führungsvorsprung oder eine Gleitrippe (oder beides) an einer oder beiden der Kontakteinheiten, insbesondere deren jeweiligen Gehäuse oder Kontaktträger, vorgesehen ist und dort derart vorsteht, dass sie die Kontakteinheiten beim Aneinanderstecken des Befestigungsarms und der Fahrzeug-Halterung zueinander hin führen, beispielsweise im Sinne eines Zentrierens.

Zweckmäßig ist es auch, wenn an einer oder beiden Kontakteinheiten eine Dichtungsanordnung zum Abdichten der jeweiligen Kontakte vorgesehen ist, wenn die Kontakteinheiten miteinander verbunden oder miteinander in Kontakt sind. Beispielsweise umfasst die Dichtungsanordnung eine an einer Stirnseite der Fahrzeug-Kontakteinheit oder der Lastenträger-Kontakteinheit angeordnete elastische Dichtung, zum Beispiel eine Ringdichtung. Ferner ist ein Vorsprung zum Eindringen in eine Dichtausnehmung, zum Beispiel eine elastische Dichtfläche, am jeweils anderen Bauteil vorhanden. Wenn also beispielsweise an der Fahrzeug-Kontakteinheit eine elastische Dichtfläche oder eine Dichtaufnahme vorgesehen ist, greift der Vorsprung an der Lastenträger-Kontakteinheit in diese Dichtfläche oder Dichtaufnahme ein.

Die Kupplung weist vorteilhaft Fixiermittel auf, mit denen der Befestigungsarm und die Fahrzeug-Halterung aneinander fixierbar sind.

Vorteilhaft ist bei einer Kupplung für ein Lastenträger-System der eingangs genannten Art ferner vorgesehen, dass die Fixiermittel ein Spannglied umfassen, das an der Steckaufnahme oder dem Steckvorsprung beweglich gelagert ist und mit dem ein außenseitig an der Steckaufnahme oder dem Steckvorsprung angeordnetes Spannteil zwischen einer Spannstellung und einer Lösestellung verstellbar ist, wobei das Spannteil mit einem an dem jeweils anderen Bauteil, dem Steckvorsprung oder der Steckaufnahme, insbesondere außenseitig, angeordneten Widerlager verspannbar ist. Vorteilhaft ist es dabei, dass der Steckvorsprung, der in die Steckaufnahme eingreift, durch außenseitig angeordnete Spannmittel verspannt wird. Dadurch ist der zweckmäßigerweise vorhandene Formschluss zwischen dem Steckvorsprung und der Steckaufnahme nicht durch beispielsweise das Widerlager oder das Spannteil beeinträchtigt ist.

Durch Betätigen des Spanngliedes ist der Steckvorsprung mit der Steckaufnahme verspannbar. Der Spannen soll dabei in einem relativ weiten Sinne verstanden werden, beispielsweise als ein formschlüssiger Halt. Selbstverständlich ist es vorteilhaft, wenn ein relativ festes Verspannen durch die erfindungsgemäßen Fixiermittel möglich ist, so dass der Steckvorsprung in der Steckaufnahme fest und beim Fahrbetrieb klapperfrei gehalten ist.

Eine vorteilhafte Ausführungsform sieht vor dass das Spannteil einen Spannarm umfasst oder an einem Spannarm angeordnet ist. Der Spannarm ist mit dem Widerlager in Eingriff bringbar. Beispielsweise ist das Spannteil an einem freien Ende des Spannarms vorgesehen. Der Spannarm hat vorzugsweise die Gestalt einer Pratze.

Eine bevorzugte Ausführungsform sieht vor, dass an dem Spannarm oder dem Widerlager mindestens ein Haken oder Zugvorsprung angeordnet ist, der mit einer korrespondierenden Hakenaufnahme oder einer Zugaufnahme am jeweils anderen Bauteil (dem Widerlager oder dem Spannarm) in Eingriff bringbar ist.

Der Spannarm ist zweckmäßigerweise an dem Steckvorsprung oder der Steckaufnahme schwenkbeweglich oder verschieblich oder beides gelagert. Somit kann der Spannarm durch Schwenken oder Verschieben in Eingriff mit dem Widerlager oder außer Eingriff aus dem Widerlager gebracht werden.

Vorzugsweise ist der Spannarm an einem unten noch im Detail beschriebenen Spannanker schwenkbar gelagert. Der Spannanker bildet zweckmäßigerweise ein Lagerelement für den Spannarm. Beispielsweise ist der Spannarm an dem Spannanker, insbesondere dessen Zugstab, schwenkbeweglich gelagert.

Das Spannteil ist zweckmäßigerweise in Richtung einer Eingriffstellung, in der das Widerlager und das Spannteil in Eingriff miteinander sind, und/oder in Richtung eines Verrastens mit dem Widerlager durch eine Federanordnung belastet. Beispielsweise greift das Spannteil dann in das Widerlager ein. Dies hat den Vorteil, dass ohne eine Betätigungshandlung der Eingriff der beiden Komponenten herstellbar ist. Am Spannteil und/oder am Widerlager ist zweckmäßigerweise mindestens eine Verdrängerschräge vorgesehen, die zum Verdrängen des Spannteils vom Widerlager weg beim Einstecken des Steckvorsprungs in die Steckaufnahme wirkt. Dadurch die Bedienung einfach, insbesondere im Zusammenhang mit der vorgenannten Federbelastung.

Weiterhin sind eine oder mehrere Spannschrägen, zum Beispiel Keilflächen, Exzenterflächen oder dergleichen vorteilhaft, die im Sinne eines Verspannens des Steckvorsprungs mit der Steckaufnahme wirken. Beispielsweise haben das Spannteil und/oder das Widerlager Schrägflächen, die beim Betätigen des Spanngliedes aneinander entlang gleiten und im Sinne eines Verspannens wirken.

Vorzugsweise ist vorgesehen, dass die Fixiermittel einen insbesondere quer zur Steckachse oder quer zur Längserstreckungsrichtung des Befestigungsarms wirkenden und verlaufenden Spannanker umfassen, der an einem an der Steckaufnahme oder dem Steckvorsprung angeordneten Widerlager gehalten ist und sich mit einem Spannglied am jeweils anderen Bauteil, dem Steckvorsprung oder der Steckaufnahme, abstützt, so dass durch Spannen des Spannglieds der Steckvorsprung mit der Steckaufnahme verspannbar ist.

Die Fixiermittel umfassen zweckmäßigerweise also einen längs oder quer zur Steckachse wirkenden und verlaufenden Spannanker. Der Spannanker ist vorteilhaft direkt an dem Widerlager gehalten, das an der Steckaufnahme oder dem Steckvorsprung angeordnet ist, zweckmäßigerweise mit einem seitlichen Versatz dazu. Der Spannanker stützt sich mit einem Spannglied, beispielsweise einer Spannmutter, am jeweils anderen Bauteil, also dem Steckvorsprung oder der Steckaufnahme ab, so dass durch Spannen des Spanngliedes der Steckvorsprung mit der Steckaufnahme verspannbar ist. Durch den quer zur Steckachse wirkenden Spannanker, beispielsweise diagonal wirkenden Spannanker, ist eine optimale Verspannung möglich.

Das Spannteil kann zwar in einer Ausführungsform direkt am Spannanker vorgesehen sein, dort beispielsweise ein Widerlagerteil bilden. Eine andere Ausführungsform sieht jedoch vor, dass das Spannteil mit dem Spannanker bewegungsgekoppelt ist. Beispielsweise kann der Spannanker auf den oben erläuterten Spannarm wirken, an dem seinerseits wiederum das Spannteil angeordnet ist oder der das Spannteil bildet.

Das Widerlager weist zweckmäßigerweise mindestens eine Widerlageraufnahme zur verdrehsicheren Aufnahme des Spannteils. Dieses Spannteil kann beispielsweise an dem vorgenannten Spannanker angeordnet sein.

Der Spannanker kann in Richtung einer Eingreifstellung federbelastet sein, in der das Spannteil, beispielsweise der Spannarm oder auch ein sonstiges Spannteil, das zum Beispiel direkt am Spannanker angeordnet sein kann, in das Widerlager eingreift. Beispielsweise ist zwischen dem Spannglied und dem Bauteil, an dem sich das Spannglied abstützt, zum Beispiel der Steckaufnahme, der dem Steckvorsprung oder dergleichen, eine Feder vorgesehen. Die Feder kann sich beispielsweise direkt oder indirekt am Steckvorsprung oder der Steckaufnahme der erfindungsgemäßen Kupplung abstützen. Beispielsweise durchdringt der Spannanker, insbesondere ein Zugstab, die Feder.

Der Spannanker durchdringt beispielsweise den Steckvorsprung oder die Steckaufnahme oder beides, beispielsweise diagonal zur Steckachse. Bevorzugt ist für den Spannanker eine Führungshülse angeordnet, die den entsprechenden Querverlauf oder Diagonalverlauf hat. Somit ist der Spannanker beispielsweise in dieser Hülse drehbar gelagert.

Das Widerlager und ein Längsanschlag des Steckvorsprungs oder der Steckaufnahme sind bezüglich der Steckachse drehwinkelversetzt und/oder haben einen Längsabstand bezüglich der Steckachse. Vorzugsweise sind das Widerlager und der Längsanschlag an einander entgegengesetzten Seiten des Steckvorsprung oder der Steckaufnahme angeordnet. Somit ist also ein optimales Spannkonzept realisiert, das heißt dass der Spannanker den Steckvorsprung mit der Steckaufnahme schräg und quer zur Steckachse verspannt. Eine gewisse Asymmetrie der Spannkräfte ist somit gegeben, die vorteilhaft auf den formschlüssigen und sicheren Halt der Lastenträgers am Fahrzeug-Träger sorgt.

Das Widerlager umfasst zweckmäßigerweise mindestens eine Widerlageraufnahme zur verdrehsicheren Aufnahme eines Spannteils des Spannankers. Bevorzugt ist dabei die Anordnung so getroffen, dass das Spannteil von der Widerlager-Aufnahme lösbar ist, so dass der Spannanker quasi aus dem Widerlager ausgehängt werden kann, wenn der Lastenträger vom Kraftfahrzeug entfernt werden soll. Es versteht sich, dass als Widerlager beispielsweise auch eine Schraubaufnahme möglich ist.

An einander entgegengesetzten Längsendbereichen eines Zugstabes des Spannankers ist einerseits das vorgenannte Spannteil, andererseits vorteilhaft ein Gewinde angeordnet, auf das beispielsweise ein Spannglied aufschraubbar ist. Dieses Spannglied ist vorzugsweise verschließbar. Somit kann also durch Verschließen des Spanngliedes der Lastenträger am Kraftfahrzeug gesichert werden.

An der mindestens einen Fahrzeug-Halterung und dem mindestens einen Befestigungsarm sind Steckmittel zum Anstecken des mindestens einen Befestigungsarms an die mindestens eine Fahrzeug-Halterung entlang einer Steckachse vorgesehen, wobei die Steckmittel eine Steckaufnahme und einen Steckvorsprung umfassen. Somit kann also beispielsweise ein freies Ende des Befestigungsarms einen Steckvorsprung bilden, die Fahrzeug-Halterung eine Steckaufnahme ausbilden oder aufweisen. Es ist aber umgekehrt denkbar, dass nämlich am Befestigungsarm eine Steckaufnahme vorhanden ist, die auf einen korrespondierenden Steckvorsprung an der Fahrzeug-Halterung aufgesteckt wird.

An dieser Stelle sei bemerkt, dass selbstverständlich eine verdrehsichere Montage zweckmäßig ist, das heißt, dass an der Fahrzeug-Halterung und an dem Befestigungsarm Dreh-Blockiermittel oder Formschlusskonturen vorhanden sind, mit denen der Lastenträger verdrehsicher am Fahrzeug-Träger montierbar ist. Diese Dreh-Fixiermittel können Bestandteile der vorgenannten Fixiermittel bilden.

Vorzugsweise ist vorgesehen, dass die mindestens eine Fahrzeug-Halterung an dem an dem Kraftfahrzeug angeordneten oder anordenbaren Fahrzeug-Träger derart angeordnet ist, dass sie bei am Kraftfahrzeug angeordnetem Fahrzeug-Träger im Bereich einer Quermitte des Kraftfahrzeugs hinter einem Kennzeichen und/oder hinter einem Stoßfänger des Kraftfahrzeugs angeordnet ist. Bei beiden Komponenten, der Fahrzeug-Halterung und dem Befestigungsarm, ist es zweckmäßig, wenn sie im am Kraftfahrzeug montierten Zustand einen verhältnismäßig großen Abstand von einem Untergrund, beispielsweise der Fahrbahn haben. Beispielsweise ist der Lastenträger so getroffen, dass er einen quermittigen oder mehrere quermittige Befestigungsarme hat, an dem dann der Tragbereich, beispielsweise eine Tragplattform, ein Tragegestell oder dergleichen, angeordnet ist.

Eine bevorzugte Ausführungsform der Erfindung sieht vor, dass der Lastenträger nur einen einzigen Befestigungsarm und der Fahrzeugträger nur eine einzige Fahrzeug-Halterung aufweist. Prinzipiell wäre es auch denkbar, dass beispielsweise zwei oder mehr relativ schmal beieinander angeordnete Befestigungsarme vorgesehen sind.

An der Fahrzeug-Halterung und dem Befestigungsarm sind zweckmäßigerweise elektrische Fahrzeug-Kontakte und elektrische Lastenträger-Kontakte zur Herstellung einer elektrischen Verbindung zwischen dem Kraftfahrzeug und dem Lastenträger vorgesehen. Dies hat insbesondere dann große Vorteile, wenn nur ein einziger Befestigungsarm vorhanden ist. Mit dem Anstecken oder Anbinden des einen Befestigungsarms an die eine Fahrzeug-Halterung ist somit nicht nur die mechanisch belastbare Verbindung zwischen Kraftfahrzeug und Lastenträger hergestellt, sondern auch gleichzeitig eine elektrische Verbindung. Über die vorgenannte elektrische Verbindung ist beispielsweise eine Bus-Verbindung möglich. Bevorzugt können somit beispielsweise elektrische Stromverbraucher, z.B. Heckleuchten, am Lastenträger vom Bordnetz des Kraftfahrzeuges mit versorgt werden.

An dem Fahrzeug-Träger ist zweckmäßigerweise eine Kupplungsarm-Aufnahme oder ein Kupplungsarm-Lager für einen Kupplungsarm einer Anhängekupplung angeordnet. Mit dem Lager kann der Kupplungsarm beispielsweise schwenkbeweglich und/oder schiebebeweglich gelagert sein. Somit hat der Fahrzeug-Träger also eine Doppelfunktion: er trägt der Lastenträger und zusätzlich die Kupplungsarm-Aufnahme, somit also gegebenenfalls den Kupplungsarm, wenn eine Anhängekupplung benötigt wird.

Der Fahrzeug-Träger wird beispielsweise von einem Querträger gebildet oder umfasst einen solchen, wobei der Querträger an der Karosserie des Kraftfahrzeuges befestigbar ist.

Die Kupplung, insbesondere die Steckaufnahme und/oder der Steckvorsprung, umfassen beispielsweise ein Rastglied und/oder ein Sicherungsglied, mit denen das eine Kupplungsbauteil am anderen Kupplungsbauteil verrastbar ist, bzw. sicherbar. Bevorzugt ist dabei eine Art Vorverrastung, das zusätzlich zu dem Rastglied oder Sicherungsglied Spannmittel vorgesehen sind. Das Rastglied oder Sicherungsglied sorgt dafür, dass der Steckvorsprung an der Steckaufnahme gehalten wird, beispielsweise um anschließend ein Verspannen, beispielsweise mit den vorgenannten Zuganker oder sonstigen Sicherungsmaßnahmen, vorzunehmen. Das Sicherungsglied bildet eine zusätzliche Maßnahme, die nicht notwendig ist, aber vorteilhaft. Selbst wenn die Verspannung ausfällt, wirkt noch das Sicherungsglied, so dass der Lastenträger jedenfalls nicht verlorengeht.

Das Vorsehen eines zusätzlichen Rastgliedes und/oder Sicherungsglieds zusätzlich zu Spannmitteln bei der Befestigung eines Lastenträgers an einer Fahrzeug-Halterung stellt eine an sich eigenständige Erfindung dar. Auf die konkrete Ausgestaltung der Spannmittel wie später noch in der Zeichnung dargestellt, beispielsweise mittels einer Spannschraube, kommt es nicht an. Es können durchaus auch andere Spannmittel vorgesehen sein, beispielsweise ein Exzenterspannglied, das von außen her auf die Verbindung zwischen Steckvorsprung und Steckaufnahme wirkt, um die beiden Bauteile miteinander zu verspannen. Weiterhin könnte auch ein Spannanker vorgesehen sein, der in Richtung der Steckachse wirksam ist, das heißt nicht quer zu dieser verläuft.

Das Rastglied und/oder das Sicherungsglied umfassen beispielsweise ein Federelement, das einen Anschlagabschnitt aufweist, der zum Verrasten oder Sichern vorgesehen ist und in der Steckaufnahme, beispielsweise tangential, verläuft. Zusätzlich hat das im Bereich des Anschlagabschnitts zweckmäßigerweise stabförmige Federelement einen Betätigungsabschnitt, der seitlich vor die Steckaufnahme zur Betätigung des Federelements im Sinne eines Entrastens oder Entsicherns vorsteht. Somit kann also das Federelement ausgelenkt werden, so dass der Rasteingriff oder Sicherungseingriff des Anschlagabschnittes ausgehoben ist. Bevorzugt greift der Anschlagabschnitt formschlüssig in den Steckvorsprung bzw. einer dort angeordneten Rastaufnahme oder Sicherungsaufnahme, ein.

Bevorzugt bildet das Spannteil ein Rastglied oder umfasst ein Rastglied. Prinzipiell ist es also möglich, dass die Fixiermittel von denselben Komponenten gebildete Rastmittel und Spannmittel umfassen.

Die Steckaufnahme und der Steckvorsprung verlaufen zweckmäßigerweise bei üblichem Gebrauch etwa horizontal. Somit weist auch die Steckachse vorteilhaft einen horizontalen Verlauf auf. Der Bediener muss also bei dieser Ausführungsform den Lastenträger nicht etwa von oben nach unten oder schräg betätigen, um die Verbindung zum Kraftfahrzeug bzw. der Fahrzeug-Halterung herzustellen, sondern kann den Lastenträger horizontal führen. Dies ist besonders komfortabel. Allerdings ist festzuhalten, dass bezüglich des vorgenannten Rastkonzepts, Sicherungskonzepts oder auch der Spannmittel selbstverständlich auch eine schrägstehende oder vertikale Steckachse denkbar ist.

An dieser Stelle sei bemerkt, dass die Steckaufnahme und/oder der Steckvorsprung zweckmäßigerweise eine rohrartige Gestalt haben.

Das nachfolgend beschriebene Konzept stellt ebenfalls eine an sich eigenständige Erfindung dar. Es ist nicht nur bei der mittig an Kraftfahrzeugen zu befestigende Lastenträgern realisierbar, sondern auch bei beispielsweise gabelartige Befestigungsarme aufweisenden Lastenträgern, wie z.B. aus EP 1 757 488 A2 zweckmäßig. Bevorzugt ist das Konzept jedoch dann, wenn die Steckachse im Wesentlichen horizontal verläuft, wobei Schrägstellungen der Schwenkachse selbstverständlich auch denkbar sind, insbesondere dann, wenn sie nur wenig von der Horizontalen abweichen:

Die Steckaufnahme hat zweckmäßigerweise eine zu einer Querschnitt-Außenkontur des Steckvorsprungs passende Querschnitt-Innenkontur, wobei die Außenkontur oder die Innenkontur einen quer zur Steckachse vorstehenden Stützvorsprung, beispielsweise eine Außenecke, eine Nut oder dergleichen, zum Eingriff in eine quer zur Steckachse verlaufende Stütz-Aufnahme, insbesondere eine Innenecke, der Innenkontur oder der Außenkontur aufweist. Der Stützvorsprung und die Stütz-Aufnahme sind zweckmäßigerweise eckig, das heißt sie haben zueinander winkelige Seitenwände. Die Stützaufnahme stützt den Stützvorsprung oder der Stützvorsprung stützt die Stützaufnahme zweckmäßigerweise in vertikaler Richtung. Somit lagert also das jeweilige Bauteil mit seinem Vorsprung beispielsweise in der Aufnahme auf. Ein Boden der Aufnahme ist beispielsweise beim Gebrauch des Lastenträger-Systems näher bei einem Untergrund als die Öffnungsseite der Aufnahme.

Beispielsweise ist die Innenkontur rautenförmig oder quadratisch. Dasselbe gilt zweckmäßigerweise auch für die Außenkontur. Der Stützvorsprung und die Stütz-Aufnahme bilden zweckmäßigerweise untere, stützende Eckbereiche eines Dreieckes oder Viereckes. Somit steht der Steckvorsprung quasi auf einer Ecke.

Die Lagerung des Steckvorsprungs in der Steckaufnahme auf dem Stützvorsprung bzw. der Stütz-Aufnahme in vertikaler Richtung hat den Vorteil, dass insbesondere in vertikaler Richtung eine optimale Abstützung möglich ist. In Fahrzeugquerrichtung wirkende Kräfte sind vergleichsweise gering, so dass insbesondere in vertikaler Richtung kein oder nur ein geringes Spiel zwischen den Bauteilen vorhanden ist.

Dies hat beispielsweise Vorteile in Bezug auf verschiedene Spannkonzepte, unter anderem dem vorher erläuterten Spannkonzept mittels eines schräg zur Steckachse verlaufenden Spannankers.

Es versteht sich, dass der Steckvorsprung und die Steckaufnahme selbstverständlich auch rund oder gerundet sein können.

Der Spannanker verläuft zweckmäßigerweise von oben nach unten, das heißt schräg zur Horizontalen. Weiterhin ist es vorteilhaft, wenn der Spannanker in einer von der Fahrzeuglängsachse durchsetzten oder zu dieser parallelen Vertikalebene verläuft.

Bevorzugt sind die Fixiermittel mit einem Schloss versehen, dass beispielsweise am Spannglied angeordnet ist. Mit dem Schloss in die Fixiermittel Intel der Fixierstellung oder der Lösestellung oder beiden Stellungen verschließbar.

Ein weiteres Befestigungskonzept, das mit dem vorstehenden und nachfolgenden Ausführungsformen zweckmäßig ist, aber auch mit anderen Ausführungsformen, die in der Anmeldung nicht im Einzelnen erläutert sind, kombinierbar ist, sieht vor, dass die Fixiermittel zweckmäßigerweise eine Überwurfhülse umfassen, die an der mindestens einen Fahrzeug-Halterung oder dem mindestens einen Befestigungsarm beweglich, beispielsweise drehbar und/oder verschieblich, gelagert ist. Die Überwurfhülse steht vor ein freies Ende der Fahrzeug-Halterung oder des Befestigungsarms vor und weist an ihrem Innenumfang Formschlusskonturen auf, die mit Gegen-Formschlusskonturen an einem Außenumfang des jeweils anderen Bauteils, des Befestigungsarms oder der mindestens einen Fahrzeug-Halterung, in Eingriff bringbar sind. Zur Hülse ist festzuhalten, dass diese zweckmäßigerweise eine ringartige Gestalt haben kann, aber auch eine teilringartige.

Die Formschlusskonturen und die Gegenformschlusskonturen umfassen beispielsweise ein Gewinde. Es ist aber auch möglich, dass beispielsweise Bajonett-Vorsprünge und zu diesen passende Bajonett-Aufnahmen vorhanden sind.

Beispielsweise bildet die Überwurfhülse das Spannglied und dient zur Betätigung eines Spannteils. Das Spannteil kann beispielsweise von Formschlusskonturen. insbesondere Bajonettkonturen, Schraubenkonturen oder dergleichen, gebildet sein oder solche aufweisen. Insbesondere ist auch das Spannteil an der Überwurfhülse angeordnet, z.B. durch die Schraubenkonturen gebildet.

Auch die nachfolgenden Maßnahmen stellen an sich ein eigenständiges Erfindungskonzept dar. Bevorzugt umfasst das Lastenträger-System nämlich einen Kennzeichen-Träger zum Tragen des Kennzeichens, wobei der Kennzeichen-Träger und/oder das Kennzeichen in einer Abdeckstellung die mindestens eine Fahrzeug-Halterung verdecken, z.B. verschließen, und in einer Freigabestellung die mindestens eine Fahrzeug-Halterung für eine Montage des Lastenträgers, beispielsweise des mindestens einen Befestigungsarms, freigeben.

Der Kennzeichen-Träger umfasst beispielsweise ein Träger-Lager, mit dem der Kennzeichen-Träger zwischen der Abdeckstellung und der Freigabestellung verstellbar, z.B. schwenkbar und/oder verschieblich ist, oder vom Fahrzeug entfernbar ist.

Nachfolgend werden Ausführungsbeispiele der Erfindung anhand der Zeichnung erläutert. Es zeigen:
- Figur 1: ein erstes Ausführungsbeispiel eines Lastenträger-Systems, bei dem der Lastenträger noch vom Kraftfahrzeug entfernt ist, wobei der Lastenträger in
- Figur 2: am Kraftfahrzeug montiert ist,
- Figur 3: ein Detail Z aus Figur 2,

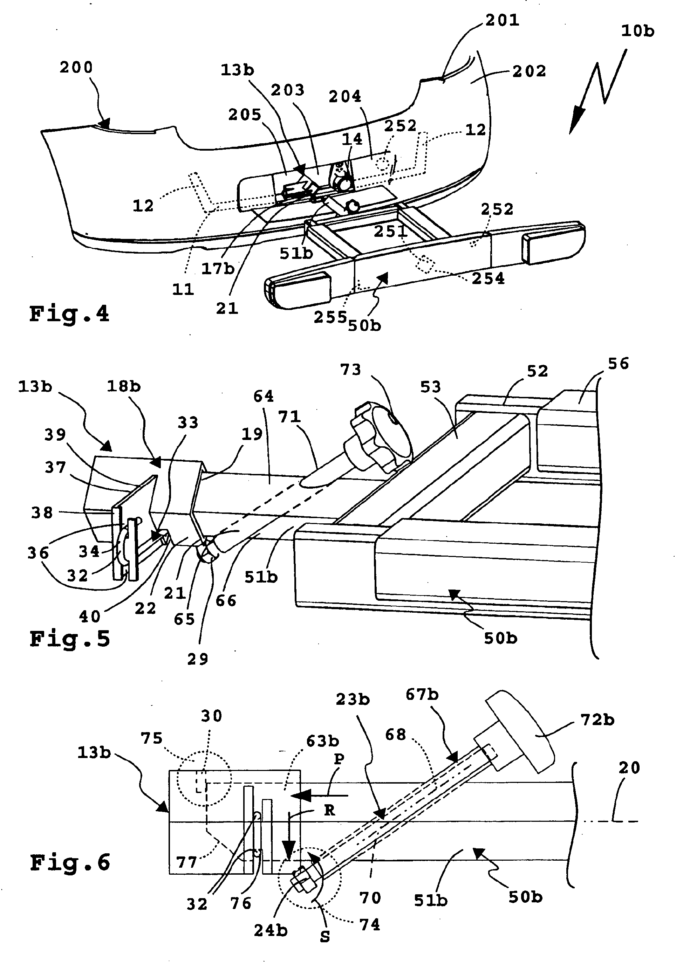

- Figur 4: ein Lastenträger-System mit einem noch von der Fahrzeug-Halterung entfernten Lastenträger,
- Figur 5: eine perspektivische Seiten-Schrägansicht der Fahrzeug-Halterung und des Lastenträgers im aneinander montierten Zustand,
- Figur 6: eine Seitenansicht der in Figur 5 dargestellten Verbindung,
- Figur 7: eine Ansicht eines Lastenträgers etwa vom Kraftfahrzeug her gesehen, wobei am Befestigungsarm des Lastenträgers elektrische Kontakte angeordnet sind, die in eine in
- Figur 8: dargestellte Fahrzeug-Halterung mit ebenfalls elektrischen Kontakten einsteckbar ist,
- Figur 9: eine Fahrzeug-Halterung eines dritten erfindungsgemäßen Lastenträger-Systems quasi vom Kraftfahrzeug innen nach hinten gesehen, so dass eine zusätzlich vorhandene Halterung für einen Kupplungsarm einer Anhängekupplung sichtbar ist,
- Figur 10: eine Variante des Ausführungsbeispiels gemäß Figur 9, jedoch mit einer vertikal verlaufenden Aufnahmehülse für eine Kugelstange einer Anhänge-kupplung,
- Figur 11: das Lastenträger-System ähnlich wie in Figuren 9, 10, jedoch ohne Anhängekupplung und mit einem Lastenträger, der noch von der Fahrzeug-Halterung entfernt ist,
- Figur 12a: den Lastenträger gemäß Figur 11 schräg vom Fahrzeug her gesehen mit der Fahrzeug-Halterung, die im noch nicht montierten Zustand dargestellt ist, wobei der montierte Zustand in
- Figur 12b: sichtbar ist,
- Figur 13: ein viertes Ausführungsbeispiel eines Lastenträgers-Systems,
- Figur 14: eine Detailansicht des Systems gemäß Figur 13 schräg vom Fahrzeug her gesehen, wobei die Fahrzeug-Halterung und der Befestigungsarm des Lastenträgers entfernt sind,
- Figur 15: eine Seitenansicht der Verbindung zwischen Lastenträger und Fahrzeug-Halterung, wobei innenliegende Komponenten gestrichelt dargestellt sind,

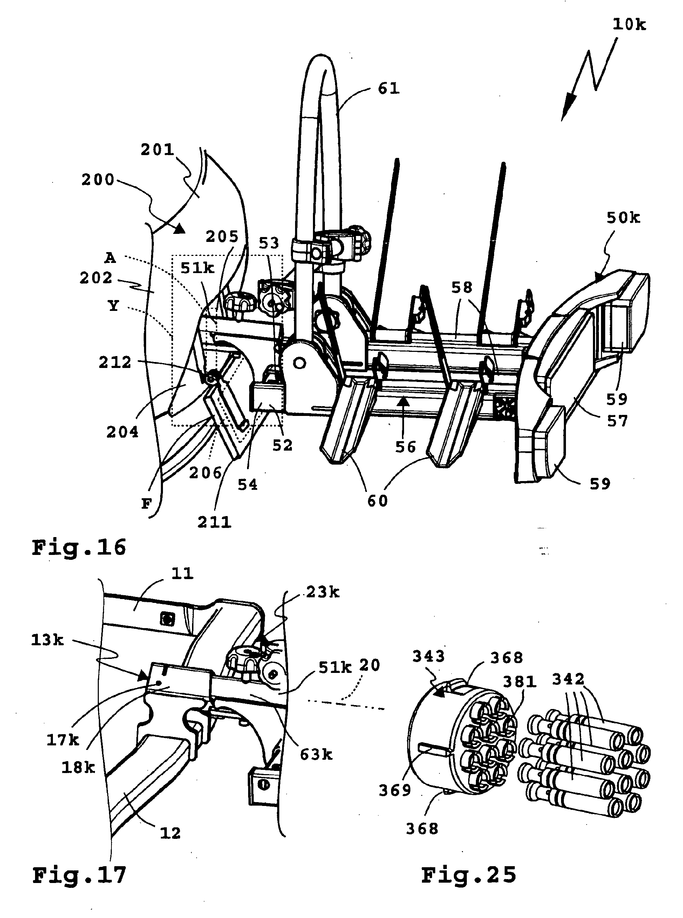

- Figur 16: ein weiteres Ausführungsbeispiel eines erfindungsgemäßen Lasten-Träger Systems im an einem Fahrzeug montierten Zustand,
- Figur 17: einen Ausschnitt Y aus Figur 17, wobei das Fahrzeug nicht dargestellt ist,
- Figur 18: eine Ansicht ähnlich wie Figur 17, jedoch mit einem von der Fahrzeug-Halterung entfernten, teilweise dargestellten Lastenträger

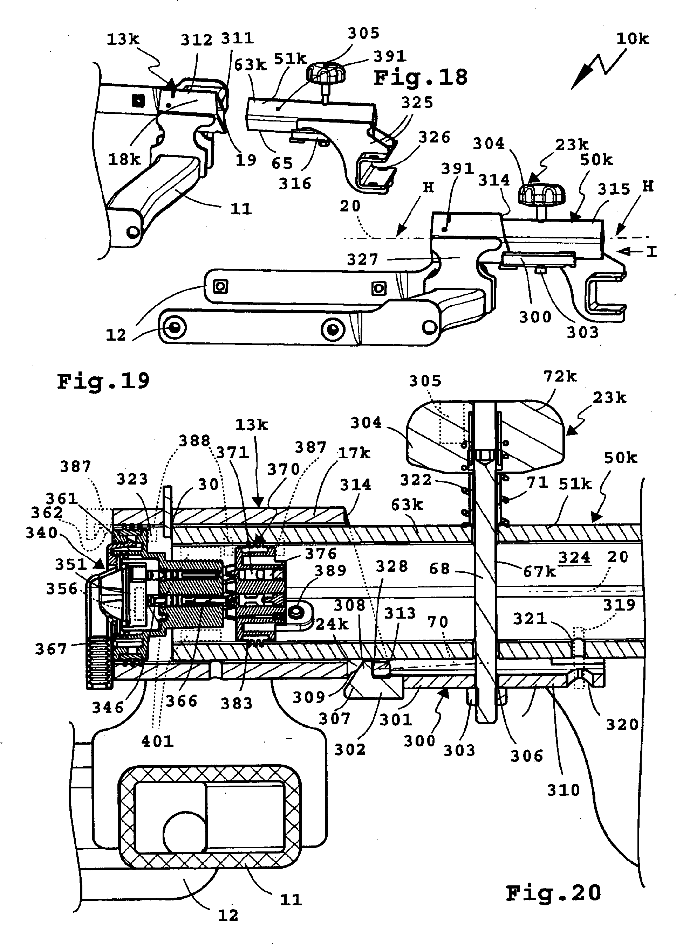

- Figur 19: eine Ansicht ähnlich wie Figur 18, wobei der Lastenträger an der Fahrzeug-Halterung montiert ist,
- Figur 20: einen Querschnitt entlang einer Schnittlinie H-H aus Figur 19,

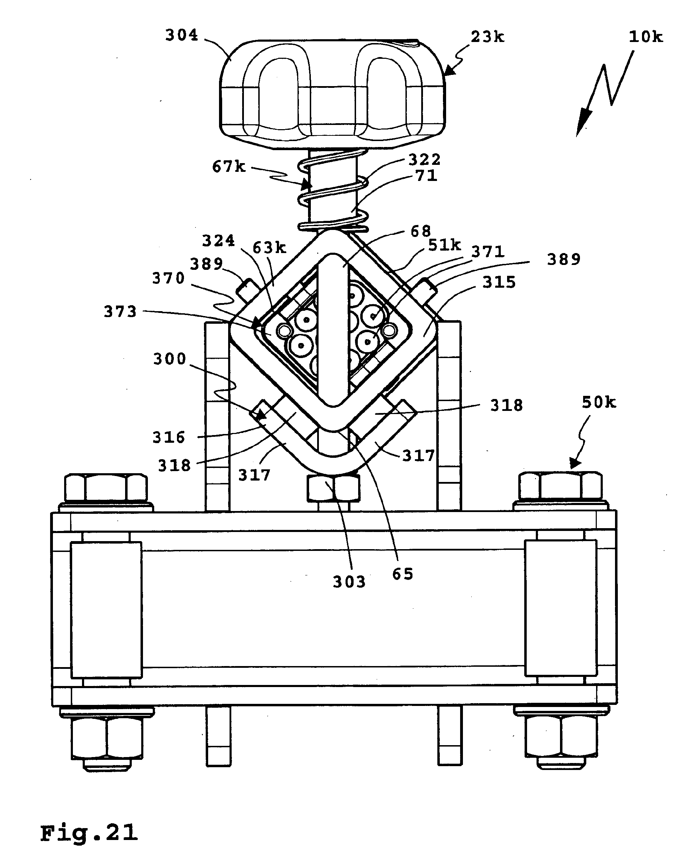

- Figur 21: eine hintere Ansicht entsprechend einem Pfeil I in Figur 19,
- Figur 22: eine Explosionsdarstellung einer fahrzeugseitigen Kontakteinheit und
- Figur 23: eine Explosionsdarstellung einer lastenträgerseitigen Kontakteinheit der Lastenträger-Kupplung gemäß Figuren 19 - 21,
- Figur 24: die Kontakteinheiten gemäß Figuren 22, 23 im ineinander gesteckten Zustand,
- Figur 25: einen Kontaktträger und Steckbuchsen der fahrzeugseitigen Kontakteinheit gemäß Figur 19,
- Figur 26: eine perspektivische Explosionsdarstellung einer fahrzeugseitigen und einer lastenträgerseitigen Kontakteinheit, die gegenüber den in den Figuren 22 und 23 dargestellten Kontakteinheiten modifiziert sind,
- Figur 27: eine weitere perspektivische Explosionsdarstellung der Anordnung gemäß Figur 26, jedoch von der lastenträgerseitigen Kontakteinheit her,
- Figur 28: eine erste Dichtungsanordnung für die Kontakteinheiten gemäß Figuren 26, 27, mit einem Detail A, und
- Figur 29: eine zweite, alternative Dichtungsanordnung für die Kontakteinheiten gemäß Figuren 26, 27 mit einem Detail B.

Bei den in der Zeichnung dargestellten Lastenträger-Systemen 10a, 10b, 10c, 10d und 10k sind zahlreiche Innovationen dargestellt, die einzeln oder in Kombination miteinander verwirklicht werden können. Gleiche oder gleichartige Komponenten haben dieselbe Bezugszahl, die jedoch zur Verdeutlichung von Unterschieden teilweise mit a, b, c, d und k bei den einzelnen Lastenträger-Systemen 10a - 10k gekennzeichnet sind.

Das Lastenträger-System 10a -10d, 10k umfasst eine Fahrzeug-Halterung 13a -13d, 13k, die an einem Fahrzeug-Träger 11 zur Befestigung mit einer Karosserie eines Kraftfahrzeuges 200 verbunden sind, beispielsweise angeschraubt, angeschweißt oder auch einstückig ausgebildet sind. Der Fahrzeug-Träger 11 ist beispielsweise ein Querrohr oder ein sonstiger Querträger, der hinter dem heckseitigen Abschluss der Karosserie des Kraftfahrzeuges 200 verläuft und beispielsweise mittels seitlicher Verbindungsteile 12, zum Beispiel Laschen, schwertartigen Vorsprüngen oder dergleichen, mit der nicht im einzelnen dargestellten Karosserie des Kraftfahrzeuges 200 verbunden ist. Jedenfalls befindet sich der Fahrzeug-Träger 11 am Heck 201 des Kraftfahrzeugs 200 und ist zweckmäßigerweise hinter einem Stoßfänger 202 des Kraftfahrzeuges 200 verborgen. Der Fahrzeug-Träger 11 kann beispielsweise bei einem Aufprall von hinten auf das Kraftfahrzeug 200 Kräfte abfangen und somit die Wirkung des Stoßfängers 202 unterstützen.

Der Stoßfänger 202 ist in einigen Figuren nur teilweise dargestellt. Der Stoßfänger 202 verdeckt zweckmäßigerweise den Fahrzeug-Träger 11 vollständig. Dennoch ist es möglich, wie nachfolgend noch deutlicher wird, den Lastenträger 50a - 50d, 50k von horizontal hinten her an der Fahrzeug-Halterung 13a -13d, 13k zu befestigen. Dazu muss nur ein Befestigungsarm 51a- 51d, 51k an der Fahrzeug-Halterung 13a -13d, 13k befestigt werden, wobei es zweckmäßig ist, dass bei jedem der Lastenträger-Systeme 10a-10d, 10k nur eine einzige Kombination aus Fahrzeug-Halterung und Befestigungsarm miteinander zu verbinden ist, d.h. dass jeder der Lastenträger 50a - 50d, 50k nur einen einzigen Befestigungsarm 51a - 51d, 51k aufweist. Dabei ist zu bemerken, dass im Prinzip mehrere, insbesondere nahe beieinander liegende Befestigungsarme und zugehörige Fahrzeug-Halterungen möglich wären, beispielsweise um die Stütz- und Tragekräfte zu verteilen.

Der Lastenträger 50a - 50d, 50k ist in der dargestellten Ausführungsform nur exemplarisch zu verstehen. Beispielsweise hat er einen Grundträger 52, der eine U-förmige Gestalt hat. Von einem Querträger 53 stehen zwei Längsträger 54 winkelig, beispielsweise rechtwinkelig ab. Vom Querträger 53 steht weiterhin der Befestigungsarm 51a-51d, 51k ab, jedoch zu den Längsträgern 54 entgegengesetzt.

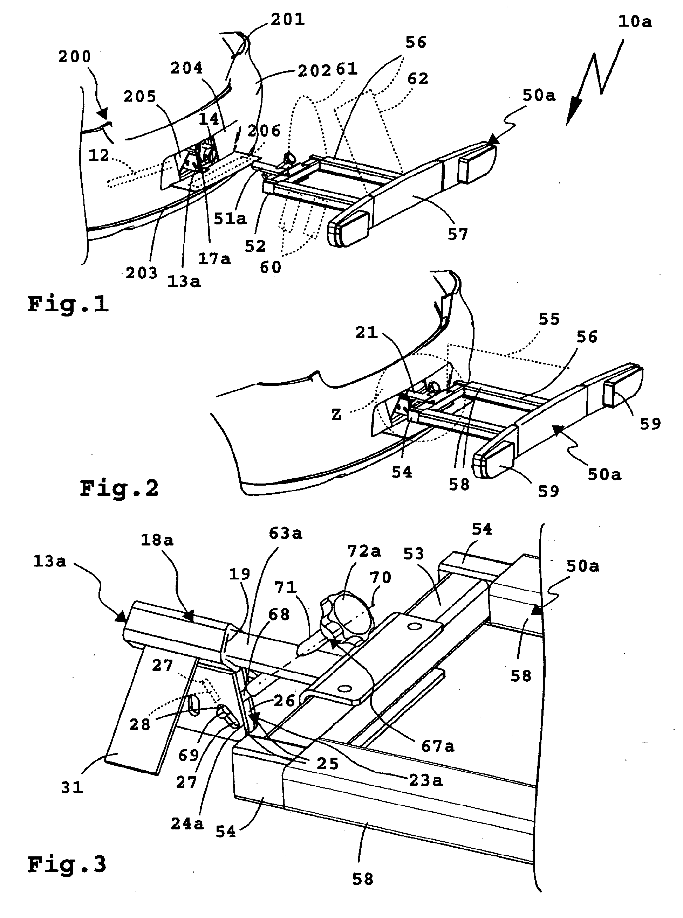

Der Befestigungsarm 51a-51d, 51k ist beispielsweise mit dem Grundträger 52 verschweißt, verschraubt oder kann auch einstückig mit diesem sein. Der Befestigungsarm 51a - 51d, 51k ist vorteilhaft im Bereich einer Quermitte des Lastenträgers 50a - 50d, 50k angeordnet. Beispielsweise befindet sich der Befestigungsarm 51a - 51d, 51k etwa in der Längsmitte des Querträgers 53. Es ist zu bemerken, dass selbstverständlich auch asymmetrische Konstruktionen denkbar sind. Weiterhin ist es nicht notwendig, dass die Längsträger 54 und der Befestigungsarm 51a - 51d, 51k parallel zueinander sind. Beispielsweise könnten die Längsträger 54 V-förmig verlaufen. Weiterhin ist es auch möglich, dass der mindestens eine Befestigungsarm und eine Tragoberfläche des Lastenträgers, insbesondere dessen Traggestell oder Grundgestell, auf derselben Horizontal-Höhe verlaufen. In Figur 2 ist beispielsweise eine Stufe 55 angedeutet, an der dies deutlich wird. Beispielsweise kann die eigentliche Tragfläche des Lastenträgers, die zum Auflegen einer Last vorgesehen ist, weiter von einem Untergrund entfernt sein, zum Beispiel einer Fahrbahn, als der jeweilige Befestigungsarm, oder auch weniger weit, d.h. mehr beim Untergrund sein, was jedoch nicht dargestellt ist. In beiden Fällen gilt dieser Zustand dann, wenn der Lastenträger am Kraftfahrzeug montiert ist.

An dem Grundträger ist ein Lastenaufsatz 56 mit einem Querträger 57 sowie Längsträgern 58 angeordnet, die insgesamt ebenfalls ein U aufweisen, das jedoch gegensinnig zum Gestell bzw. "U" des Grundträgers 52 orientiert ist. Von dem Querträger 57 stehen seitlich Leuchten 59 ab. Die Leuchten 59 können schwenkbeweglich sein, so dass sie beispielsweise zu den Längsträgern 58 hin geschwenkt werden können, wenn der Lastenträger 50a - 50d, 50k nicht gebraucht wird. Am Lastenaufsatz 56 können Stützkomponenten und Tragkomponenten angeordnet sein, die eine zu transportierende Last stützen oder tragen. Exemplarisch ist beispielsweise eine Stütze 61 dargestellt, die von den Längsträgern 58 winkelig, zum Beispiel rechtwinkelig absteht, wenn sie gebraucht wird. Die Stütze 61, beispielsweise ein U-Bügel, kann zu den Längsträgern 58 zweckmäßigerweise hin geschwenkt werden (bei Nichtgebrauch). Weiterhin sind Tragelemente 60, beispielsweise Rinnen, Tragplattformen oder dergleichen am Lastenaufsatz 56 angeordnet, beispielsweise schwenkbar an den Längsträgern 58.

Der Grundträger 52 oder Lastenaufsatz 56 stellt einen Tragbereich zum Tragen einer Last bereit.

Ein weiteres, nicht detailliert dargestelltes Komfortmerkmal stellt dar, dass der Lastenaufsatz 56 bezüglich des Grundträgers 52 beweglich gelagert ist, beispielsweise schwenkbeweglich, so dass er in eine in Figur 1 angedeutete Ladestellung 62 vom Heck 201 des Kraftfahrzeugs 200 weg schwenkbar ist. Aber auch eine insbesondere teleskopartige Schiebebewegung ist möglich, beispielsweise dadurch, dass die Längsträger 58 auf den Längsträgern 54 schiebebeweglich gelagert sind. Die (unteren) Längsträger 54 stützen die (oberen) Längsträger 58 ab, d.h. die Längsträger 58 liegen zumindest beim Fahrbetrieb des Kraftfahrzeuges 200 bzw. des Lastenträgers 50a - 50d, 50k auf den Längsträgern 54 auf. Es versteht sich, dass die vorstehende Ausführungsform des Lastenträgers 50a - 50d, 50k lediglich exemplarisch zu verstehen sind, so dass beispielsweise wahlweise Fahrräder, eine Transportbox, Skier oder auch andere Gegenstände, Surfbretter oder dergleichen, auf dem Lastenträger 50a - 50d, 50k transportierbar sind.

Die nachfolgend im Detail beschriebenen Befestigungskonzepte der Lastenträger 50a - 50d, 50k am Kraftfahrzeug 200, d.h. an den Fahrzeug-Halterungen 13a - 13d, 13k sind zudem bei einfachem Aufbau leicht handhabbar, so dass es durchaus denkbar ist, am Kraftfahrzeug 200 unterschiedlich ausgebaute, d.h. zum Tragen unterschiedlichster Lasten vorgesehene verschiedene Lastenträger zu verwenden. In jedem Fall ist die Anwendung ästhetisch sehr ansprechend, da man nämlich am Kraftfahrzeug 10 bei entferntem Lastenträger 50a - 50d, 50k keine störenden, die Fahrzeugoptik beeinträchtigenden Komponenten sieht. Die Fahrzeug-Halterungen 13a -13d, 13k sind nämlich hinter dem Stoßfänger 202 etwa im Bereich einer Quermitte 203 des Kraftfahrzeuges 200 angeordnet, so dass nicht nur eine zentrale, eine gleichmäßige Belastung einer Grundstruktur des Kraftfahrzeuges 10 darstellende Anbindung oder Abstützung eines Lastenträgers an einem Kraftfahrzeug gewährleistet ist, sondern auch eine optisch optimierte Anbindung.

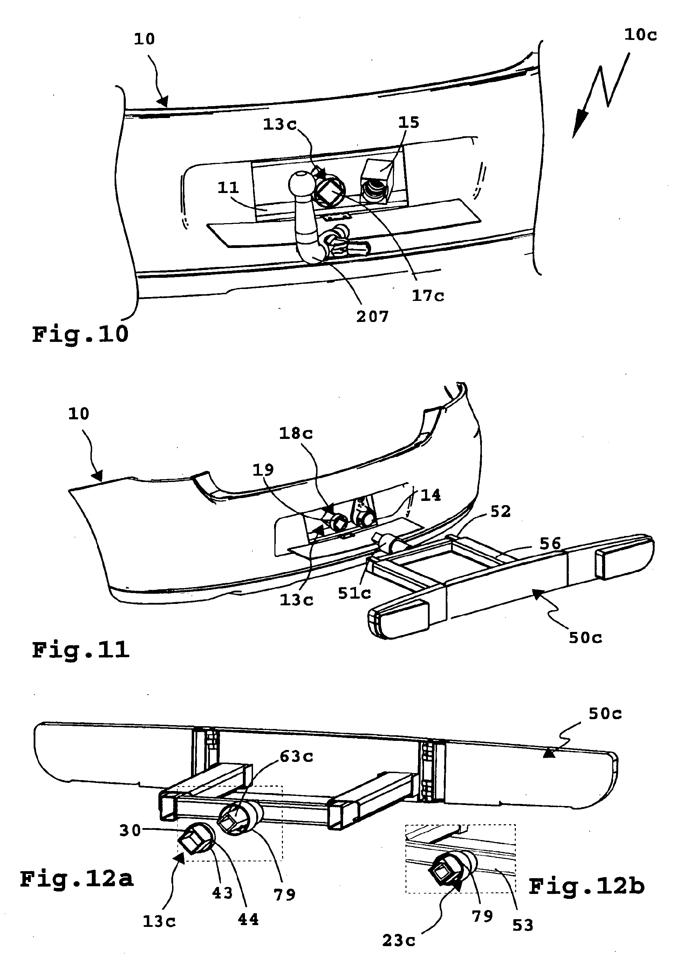

Im Bereich der Quermitte 203 hat der Stoßfänger 202 eine Vertiefung oder einen Ausschnitt 204, der zur Anbringung eines Kennzeichens 206 vorgesehen ist. Im Bereich der Vertiefung bzw. des Ausschnitts 204 befinden sich ein Ausschnitt 205 oder eine Ausschnittanordnung, da nämlich auch mehrere, insbesondere kleinere Ausschnitte vorgesehen sein können, z.B. für die Fahrzeug-Halterung 13a - 13d, 13k, gegebenenfalls auch für beispielsweise weitere Komponenten, z.B. elektrische Kontakte 14, zum Beispiel eine Steckdose, und/oder eine Kupplungsarm-Aufnahme 15 (Figur 10).

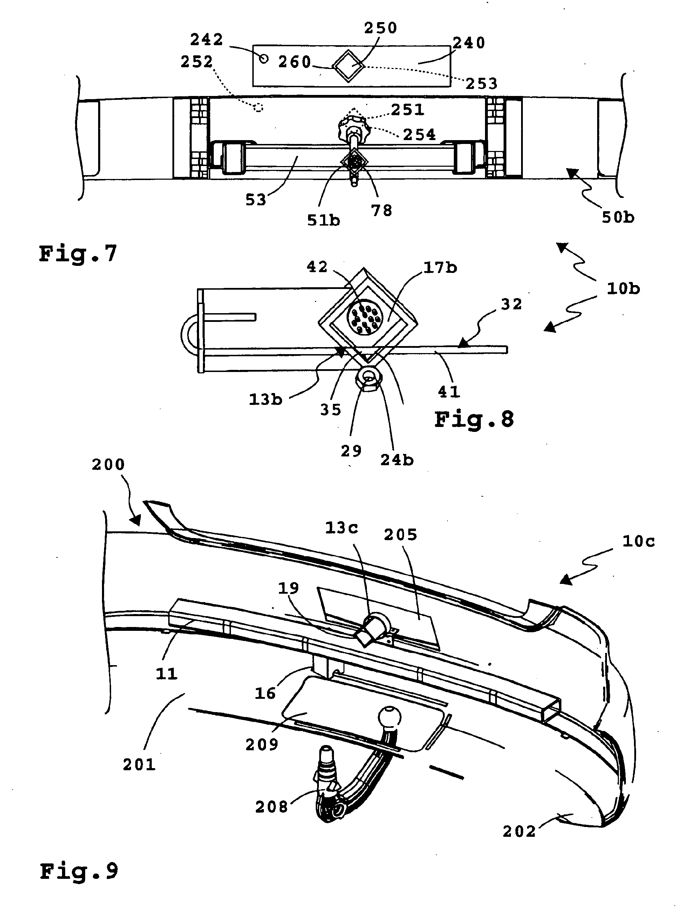

Die elektrischen Kontakte 14 sowie die Kupplungsarm-Aufnahme 15 sind zweckmäßigerweise an dem Fahrzeug-Träger 11 befestigt, beispielsweise verschraubt oder verschweißt, so dass dieser als Ganzes, d.h. einschließlich der Fahrzeug-Halterung 13a -13d, 13k als Modul am insoweit vormontierten Kraftfahrzeug 200 befestigt werden kann. Die Kupplungsarm-Aufnahme 15 umfasst ebenso wie eine Kupplungsarm-Aufnahme 16 (Figur 9) beispielsweise eine Steckhülse, in die ein Steckende eines Kupplungsarmes 207, 208 einsteckbar ist. Während die Steckaufnahme der Kupplungsarm-Aufnahme 15 im Wesentlichen horizontal verläuft, ist die Steckaufnahme der Kupplungsarm-Aufnahme 16 im Wesentlichen vertikal orientiert, d.h. sie ist beispielsweise nach unten, zur Fahrbahnoberfläche oder zum Untergrund hin, offen. Das Steckende des Kupplungsarmes 208 wird beispielsweise durch eine Öffnung 209 an einem unteren, im Wesentlichen horizontal verlaufenden Abschnitt des Stoßfängers 202 hindurch gesteckt. Bei der Anordnung gemäß Figur 9 ist also zusätzlich eine Öffnung 209 oder ein Ausschnitt am Stoßfänger erforderlich, insbesondere mit dieser etwa in der Art einer Schürze nach unten in Richtung nach Fahrtrichtung vorn verlängert ist. Bei dem in Figur 10 dargestellten Konzept hingegen ist die Kupplungsarm-Aufnahme 15 quasi hinter dem Kennzeichen 206 verborgen, wenn dieses den Ausschnitt 205 oder die Ausschnittanordnung verdeckt.

An dieser Stelle sei noch auf einen Unterschied hingewiesen, nämlich dass zur Fixierung von Kupplungsarmen und erfindungsgemäßen Lastenträgern unterschiedliche Befestigungs- und Fixiersysteme, aber auch unterschiedliche elektrische Verbindungs-Konzepte vorteilhaft sind, d.h. dass man zweckmäßigerweise wie beim Ausführungsbeispiel separate, zur Aufnahme oder zum schwenkenden Lagern von Kupplungsarmen vorgesehene Halterungen oder Lager vorsieht, während für die Lastenträger dafür speziell geeignete Fahrzeug-Halterungen bzw. Fixiermittel vorgesehen sind, so dass an die jeweiligen Gegebenheiten, beispielsweise Belastbarkeit oder Handhabbarkeit optimal ausgestaltetes Systeme möglich sind.

Weiterhin ist es vorteilhaft, wenn die Kupplungsarm-Aufnahmen 15 und 16 etwas außerhalb der Quermitte 203 angeordnet sind. Die Kupplungsarme 207, 208 haben im Bereich ihrer Kugelstangen dazu angepasste Verläufe bzw. Geometrien, so dass die Kupplungskugel sich bei an der Kupplungsarm-Aufnahme 15, 16 montiertem Kupplungsarm 207, 208 etwa im Bereich der Quermitte 203 des Kraftfahrzeuges 200 befindet. Die Kupplungskugel ist dann quasi quer mittig direkt hinter der Fahrzeug-Halterung 13a -13d, 13k angeordnet.

Ein alternatives Konzept kann natürlich auch vorsehen, dass für einen Kupplungsarm und für einen Lastenträger ein und dieselben Befestigungsmittel verwendet werden, beispielsweise in der Ausgestaltung, die nachfolgend noch detailliert erläutert wird.

Das Kennzeichen 206 ist an einem Kennzeichen-Träger 210 befestigt. Der Kennzeichen-Träger 210 umfasst beispielsweise eine Platte, ein Traggestell oder dergleichen, sowie zweckmäßigerweise eine nicht im Detail dargestellte Halterung oder Halteelemente für das Kennzeichen 206. Beispielsweise sind rahmenartige oder steckartige Haltemittel vorhanden, mit denen das Kennzeichen 206 am Kennzeichen-Träger 210 befestigbar ist. Es ist aber auch möglich, dass das Kennzeichen 206 an dem Kennzeichen-Träger 210, beispielsweise der Trägerplatte 211 oder einem Rahmen, verschraubt ist.

Die Trägerplatte 211, somit also der Kennzeichen-Träger 210, ist mittels eines Träger-Lagers 212 schwenkbar zwischen einer Freigabestellung F, die für eine Montage des Lastenträger 50a - 50d, 50k die Fahrzeug-Halterung 13a -13d, 13k freigibt, und einer Abdeckstellung A verstellbar, in der er die Fahrzeug-Halterung 13a -13d, 13k verdeckt. Das Träger-Lager 212 ist beispielsweise ein Schwenklager, so dass der Kennzeichen-Träger 210 und /oder das Kennzeichen 206 zwischen einer im Wesentlichen vertikalen Stellung (Abdeckstellung A) und einer dazu winkeligen, beispielsweise horizontalen Stellung (Freigabestellung F) verschwenkbar sind. Beim Ausführungsbeispiel schwenkt der Kennzeichen-Träger 210 in die Freigabestellung F nach unten, so dass der Befestigungsarm 51a - 51d, 51k oberhalb des Kennzeichen-Trägers 210 montierbar ist. Ein Schwenken nach oben ist allerdings auch möglich.

Für einen sicheren Halt des Kennzeichen-Trägers 210 können beispielsweise auch Rastmittel vorgesehen sein, die beispielsweise einen Rastvorsprung am Kennzeichen-Träger 210 umfassen, der in einer korrespondierende Rastaufnahme am Stoßfänger 202 einrastet.

An dem Träger-Lager 212 könnte auch eine Feder, z.B. eine Schenkelfeder, vorgesehen sein, die die Trägerplatte oder ein sonstiges, das Kennzeichen 206 haltendes Bauteil, in die Abdeckstellung A oder die Freigabestellung F beaufschlagt.

Eine sozusagen bidirektionale Beaufschlagung in die Abdeckstellung und die Freigabestellung oder ein Halt in beiden Stellungen könnte über einen Totpunktmechanismus, mit oder ohne Feder, erfolgen.

An dieser Stelle sei bemerkt, dass eine solche Modularität bzw. modulare Bauweise des Lastenträger-Systems gemäß der Erfindung vorgesehen sein kann, dass bis auf das Vorsehen eines ausreichend großen Ausschnittes im Bereich der Kennzeichen-Montagefläche am Kraftfahrzeug keine weiteren Maßnahmen erforderlich sind. Beispielsweise können die magnetischen Haltemittel 213 mit ferromagnetischen Bereichen an der Fahrzeug-Halterung 13a -13d, 13k zusammenwirken. Ferner können auch an der Fahrzeug-Halterung 13a -13d, 13k Rastmittel, zum Beispiel Rastvorsprünge oder Rastaufnahmen, vorgesehen sein, die direkt mit den zugehörigen Rastmitteln am Kennzeichen-Träger 210 zusammenwirken.

Des Weiteren ist zu bemerken, dass selbstverständlich auch das Träger-Lager 212 nicht unmittelbar am Stoßfänger 202 befestigt sein müsste, beispielsweise an einer der nachfolgend beschriebenen Fahrzeug-Halterungen 13a -13d, 13k befestigt sein kann. Dies gilt übrigens auch für die nachfolgend noch beschriebenen weiteren Varianten von erfindungsgemäßen Kennzeichen-Trägern, deren Lager, Rastmittel, Steckmittel und dergleichen mehr direkt mit korrespondierenden Gegenmitteln am Fahrzeug-Halter zusammenwirken können:

Anstelle der Trägerplatten kann auch ein Rahmen oder ein sonstiges Haltebauteil für das Kennzeichen 206 vorgesehen sein.

Vorteilhaft ist an der Trägerplatte 241 ein Steckvorsprung 250 vorgesehen, der zur Fahrzeug-Halterung 13a oder 13b passt. Der Steckvorsprung steht beispielsweise an der vom Kennzeichen 206 abgewandten Seite von der Trägerplatte 241 ab und ist in eine korrespondierende Steckaufnahme einsteckbar. Am Lastenträger 50a oder 50b kann beispielsweise eine Steckaufnahme 251 vorgesehen sein, in die der Steckvorsprung 250 passt. Beispielsweise weist der Querträger 57 eine solche Steckaufnahme 251 auf. Die Steckaufnahme 251 fluchtet vorteilhaft im Wesentlichen mit der Fahrzeug-Halterung 13a oder 13b, so dass das Kennzeichen 206 quer mittig am Lastenträger 50a oder 50b befestigbar ist. Dies hat unter anderem den Vorteil, dass nur ein einziges Kennzeichen 206 benötigt wird und dieses zudem auch stets optimal lesbar am Kraftfahrzeug 200 oder am Lastenträger 50a, 50b angeordnet sein kann. Der Steckvorsprung 250 bildet einen Bestandteil von Kennzeichen-Befestigungsmittel 253. Die Steckaufnahme 251 bildet einen Bestandteil von Lastenträger-Befestigungsmitteln 254, mit denen der Kennzeichen-Träger 240 am Lastenträger 50a, 50b befestigbar ist.

Die Lastenträger-Befestigungsmittel 254 umfassen ferner vorteilhaft eine Schlossaufnahme 252, die mit dem Schloss zusammenwirkt. Beispielsweise kann ein am Kennzeichen-Träger 240 angeordnetes Schloss 242 in die Schlossaufnahme 252 eindringen, wenn der Kennzeichen-Träger 240 am Lastenträger 50a befestigt wird.

Weiterhin kann zweckmäßigerweise bei einem erfindungsgemäßen Kennzeichen-Träger eine Dichtung vorhanden sein, die sich beispielsweise dichtend um elektrische Steckkontakte, eine fahrzeugseitige Aufnahme oder dergleichen anlegt, oder aber auch beispielsweise an eine Oberfläche des Stoßfängers. Beispielhaft ist am Steckvorsprung 250 eine Dichtung 260 eingezeichnet, beispielsweise an dessen Außenumfang, die sich in der Art einer Dichtlippe die Fahrzeug-Halterung 13a-13d, 13k umschließend und/oder stirnseitig an diese anlegend wirkt.

Die Lastenträger-Systeme 10a, 10h folgen jeweils einem Steckkonzept zur Befestigung des Lastenträgers am Kraftfahrzeug. An dieser Stelle sei bemerkt, dass die fahrzeugseitig quer mittige Anordnung mit insbesondere nur einem einzigen Befestigungsarm, wobei die fahrzeugseitige Halterung hinter einem Kennzeichen verborgen sein kann, selbstverständlich auch andere Befestigungskonzepte zulässt, beispielsweise ein Verschrauben, Verspannen oder dergleichen.

Die Fahrzeug-Halterung 13a -13d, 13k umfassen jeweils Steckaufnahmen 17a - 17d, 17k, die an Aufnahmeteilen 18a, 18d, 18k vorgesehen sind, beispielsweise Aufnahmehülsen. In die Steckaufnahme 17a - 17d, 17k sind Steckvorsprünge 63a - 63d, 63k einsteckbar, die an den freien Enden der Befestigungsarme 51a - 51d, 51k vorhanden sind. Bevorzugt ist dabei eine drehschlüssige Aufnahme bzw. eine drehschlüssige Halterung, so dass der in die Steckaufnahme 17a - 17d, 17k eingesteckte Steckvorsprung 63a - 63d, 63k unverdrehbar gehalten ist. Dies ist zweckmäßigerweise bereits durch Konturgestaltung von Steckaufnahme und Steckvorsprung bewirkt, bei denen mehrkantige bzw. polygonale Konturen zweckmäßig sind.

Beispielsweise sind bei den Lastenträger-Systemen 10a, 10b, 10c und 10k viereckige bzw. quadratische Querschnitt-Innenkonturen 19 an den Steckaufnahmen 17a - 17c, 17d, 17k vorgesehen, zu denen ebenfalls quadratische Querschnitt-Außenkonturen 64 an den Steckvorsprüngen 63a - 63c, 63d, 63k, formschlüssig passen. Während jedoch die Horizontalabstützung, d.h. die Abstützung bezüglich von Kräften, die im Wesentlichen vertikal nach unten wirken, bei dem Aufnahmeteil 18d, 18k und dem Steckvorsprung 63d, 63k durch eine Bodenwand bzw. eine Bodenseite des Steckvorsprungs 63d, 63k realisiert sind, stehen die Innenkontur 19 und Außenkontur 64 bei den Fahrzeug-Halterungen 13a - 13c und den dazu passenden, ebenfalls Kupplungsteile darstellenden Befestigungsarmen 51a - 51c quasi auf einer Ecke. Dies ermöglicht eine optimale Lastverteilung, insbesondere aber auch eine günstige Zentrierung der Steckverbindung zwischen Steckaufnahme 17a - 17c und Steckvorsprung 63a - 63c.

Der Steckvorsprung 63a - 63c wird also entlang einer Steckachse 20 in die zugehörige Steckaufnahme 17a - 17c eingesteckt. Damit gelangen die jeweiligen Außeneckbereiche des Steckvorsprungs 63a - 63c in Eingriff mit entsprechenden Inneneckbereichen der Steckaufnahme 17a - 17c, unter anderem auch ein unterer Inneneckbereich der Innenkontur 19, der somit eine bodenseitig geschlossene, oben offene Führungskontur oder Führungsnut bildet, sowie ein dazu korrespondierender, bei Gebrauch des Lastenträger-Systems 10a - 10c untere Außeneckkontur der Außenkontur 64 in Eingriff. Der Inneneckbereich bildet dabei eine Stütz-Aufnahme 21, der Außeneckbereich einen Stütz-Vorsprung 65. Mithin stellt also der am weitesten vorstehende Bereich des Stütz-Vorsprungs 65 denjenigen Bereich dar, der die meisten in vertikaler Richtung wirkenden Kräfte aufnimmt, korrespondierend dazu selbstverständlich der am nächsten beim Untergrund befindliche Bereich der Stütz-Aufnahme 21, der dementsprechend auch die meisten Vertikalkräfte aufnehmen kann.

Im Prinzip könnte also der Stütz-Vorsprung 65 um den unteren Lagerpunkt zur Seite kippen, wobei allerdings dann seine Seitenwände 66 an den Seitenwänden 22 der Stütz-Aufnahme 21 zu liegen kommen, seitlich also abgestützt sind. Damit ist also die Verdrehsicherheit gewährleistet, zudem auch eine optimale Zentrierung.

Es versteht sich, dass dieses Konzept des sozusagen auf die Ecke gestellten Vieleckes nicht nur bei Lastenträgern mit einem Befestigungsarm, sondern auch bei Lastenträgern mit mehreren Befestigungsarmen oder Steckvorsprüngen und dazu passenden Steckaufnahmen am Fahrzeug (oder umgekehrt) zweckmäßig ist. Dabei sind auch Kombinationen möglich, d.h. dass beispielsweise an einem Befestigungsarm das Konzept der auf der Ecke stehenden Vieleckkontur realisiert ist, beim anderen Befestigungsarm und der zugehörigen Fahrzeug-Halterung eine runde Kontur (Innenkontur und Außenkontur) gewählt sind. Desweiteren ist festzuhalten, dass das Konzept selbstverständlich auch bei anderen polygonen Innen- und Außenquerschnittskonturen möglich ist, beispielsweise dreieckförmigen, pentagonalen oder hexagonalen Konturen. Zum Beispiel kann man sich vorstellen, dass beispielweise ein dreieckiger Innen- und Außenquerschnitt gewählt ist, wobei sich im Wesentlichen gleiche Winkel des Dreieck zweckmäßigerweise etwa in der selben Horizontalebene liegen, während der dritte Eckbereich des den horizontal darunter liegenden, einzelnen Eckbereich darstellt, auf dem das Dreieck "steht".

Wenn die Steckvorsprünge 63a, 63d, 63k an die Steckaufnahmen 17a - 17d, 17k angesteckt sind, können sie anhand von Fixiermitteln 23a - 23d, 23k fixiert werden, insbesondere bezüglich der jeweiligen Steckachse 20.

Die Fixiermittel 23a, 23b umfassen Spannanker 67a, 67b, deren Zugstab 68, den man auch als Spannstab bezeichnen kann, diagonal zur Steckache 20 verläuft. Die Spannanker 67a, 67b können an Widerlagern 24a, 24b festgelegt sein, die im Bereich der Steckaufnahmen 17a, 17b vorhanden sind. Das Widerlager 24a wird beispielsweise von zwei Halteteilen 25 bereitgestellt, die vom Aufnahmeteil 18a abstehen, vorliegend beispielsweise nach unten. Die Halteteile 25 sind beispielsweise plattenartig. Zwischen den Halteteilen 25 ist eine Einführnut 26 vorhanden, vorliegend als eine Art Schlitz, die einen Zugang zu quer zur Einführnut 26 vorhandenen Haltenuten 27 ermöglicht. Die Haltenuten 27 sind beispielsweise in der Art von Langlöchern ausgestaltet. Es versteht sich, dass auch ein einstückiges Halteteil mit einer Nutanordnung vorgesehen sein kann, die die nachfolgende Funktion eines Widerlagers 24a erfüllt:

An dem dem Widerlager 24a zugeordneten Längsende des Zugstabes 68 des Spannankers 67a ist ein Spannteil 69 angeordnet, beispielsweise ein quer zur Längserstreckungsrichtung des Zugstabes 68 verlaufendes Anker- oder Hakenelement. Das Spannteil 69 ist beispielsweise stabförmig. Das Spannteil 69 ist in eine solche Drehposition verstellbar, dass es in die Einführnut 26 einführbar ist. Wird der Zugstab 68 anschließend wieder verdreht, gelangt das mit dem Zugstab 68 drehfest verbundene, beispielsweise einstückige oder angeschweißte Spannteil 69 in Eingriff mit den Einführnuten 26. Zu diesem Zweck sind diese als entsprechende Langlöcher ausgestaltet, so dass das Spannteil 69 quasi einschwenkbar ist. Die Haltenuten 27 verlaufen beispielsweise etwa rechtwinkelig zu einer Spannachse 70, die der Längserstreckungsachse oder Längserstreckungsrichtung des Zugstabes 68 entspricht. Die Haltenuten 27 sind zweckmäßigerweise bezüglich ihrer Längserstreckungsrichtung zueinander versetzt, so dass sie beispielsweise zu einem Punkt, der von der Spannachse 70 oder dieser sehr nahe stehenden, parallelen Achse durchsetzt ist, punktsymmetrisch sind. Somit muss also der Bediener den Zugstab 68 lediglich verdrehen, bis das Spannteil 69 an Längsenden den Haltenuten 27 anschlägt und dann verdrehfest festgelegt ist.

Jedenfalls legt das Widerlager 24a, 24b den Spannanker 67a, 67b bezüglich der Spannachse 70 (oder Zugachse) zugfest fest.

Der Befestigungsarm 51a, 51b könnte zur Aufnahme des Zugstabes 68 des Spannankers 67a, 67b beispielsweise eine Bohrung aufweisen. Vorliegend ist jedoch eine Führungshülse 71 vorgesehen, die den Befestigungsarm 51a, 51b diagonal, d.h. entlang der Spannachse 70, durchsetzt. In der Führungshülse 71 ist der Zugstab 68 drehbar aufgenommen.

Am vom Spannteil 69 abgewandten Ende des Zugstabes 68 des Spannankers 67a ist ein Gewinde vorgesehen, das vor die Führungshülse 71 vorsteht. Auf dieses Gewinde ist ein Spannglied 72a aufgeschraubt. Dass Spannglied 72a umfasst beispielsweise ein knebelartiges Handgriffgehäuse, in dem eine Spannmutter zum Aufschrauben auf das vorgenannte Gewinde des Zugstabes 68 vorhanden ist. Zweckmäßigerweise weist das Spannglied 72 ein Schloss 73 auf, mit dem es verschließbar ist. Beispielsweise wird der Handgriffkörper durch Verschließen des Schlosses 73 von der innenliegenden Spannmutter drehentkoppelt, so dass er bezüglich der Spannmutter frei drehen kann, jedoch keine Kraftübertragung im Sinne eines Lösens des Spanngliedes 72 mehr ausüben kann.

Die Haltenut 27 bildet einen Bestandteil einer Widerlager-Aufnahme 28 zum verdrehsicheren Halten des Spannteils 69.

Beim Lastenträger-System 10b ist das Widerlager 24a zwar zum bezüglich der Spannachse 70 zugfesten Halten, jedoch nicht zum verdrehsicheren Halten des Spannankers 67b ausgestaltet. Vielmehr ist ein Schraubgewinde vorgesehen, in das der Spannanker 67b einschraubbar ist. Beispielsweise umfasst das Widerlager 24b eine Mutter 29, die am Aufnahmeteil 18b angeordnet, beispielsweise angeschweißt ist. Das Spannglied 72b ist am Zugstab 68 des Spannankers 67b verdrehfest angeordnet, so dass es quasi den Kopf einer Schraube bildet. Auch das Spannglied 72b ist als eine Art Handgriff ausgestaltet, d.h. es kann bequem mit einer Hand umgriffen und verdreht werden.

Die Spannglieder 72a, 72b stützen sich auf der Führungshülse 71 ab, so dass sie eine Spannkraft entlang der Spannachse 70 ausüben. Dadurch wird zum einen der Stütz-Vorsprung 65 in die Stütz-Aufnahme 21 quasi hineingedrückt, nämlich durch eine zur Steckachse 20 rechtwinkelige Kraftkomponente R, zum anderen wird das freie Ende des Steckvorsprungs 63a, 63b gegen einen Längsanschlag 30 am Aufnahmeteil 18a, 18b gezogen bzw. gespannt, nämlich durch eine zur Steckachse 20 parallele Kraftkomponente P.

Der Längsanschlag 30 und das Widerlager 24a, 24b sind in einer bevorzugten Ausführungsform an voneinander entfernten, beispielsweise diagonal zueinander liegenden Bereichen bezüglich der Steckachse 20 angeordnet. Beispielsweise ist der Längsanschlag 30 im Inneren des hülsenartigen Aufnahmeteils 18a, 18b oben angeordnet, während das Widerlager 24a, 24b unten (bezogen jeweils auf eine Horizontallage) angeordnet ist. Weiterhin ist es vorteilhaft, dass das Widerlager 24a, 24b und der Längsanschlag 30 bezogen auf die Steckachse 20 einen Längsabstand zueinander haben, was quasi zu einem Verkippen und Verkanten der Steckvorsprungs 63a, 63b in der Steckaufnahme 17a, 17b führt. Das Widerlager 24a, 24b definiert dabei sozusagen einen Kipppunkt oder Drehpunkt, um den der Steckvorsprung 63a, 63b um ein gewisses, sehr geringes Maß schwenken kann (Pfeil S), jedenfalls soweit schwenken kann, bis sein freies Ende am Längsanschlag 30 anschlägt.

Eine in der Zeichnung nicht dargestellte Ausführungsform kann vorsehen, dass das freie Ende eines Steckvorsprungs im Wesentlichen flächig, d.h. im mehreren Drehwinkelpositionen bezüglich der Steckachse oder Steckmittelachse anschlagen kann. Bei den Ausführungsbeispielen ist jedoch eine außermittige bzw. von der Steckachse abgewandte Position für den Längsanschlag 30 gewählt. Das freie Ende des Steckvorsprungs 63a, 63b schlägt also nicht vollflächig an einem Längsanschlag an, sondern nur partiell, wobei die Anordnung vorteilhaft so getroffen ist, dass ein Längsanschlagbereich 75, mit dem der Steckvorsprung 63a am Längsanschlag 30 anschlägt, und ein Widerlagerbereich 74, beispielsweise der Austrittsbereich des Spannankers 67a, 67b aus dem Befestigungsarm 51a, 51b, an einander entgegengesetzten Seiten bezüglich der Steckachse 20 bzw. der Steckmittelachse oder die sich jeweilige Achse enthaltenden Ebene liegt.

Die Aufnahmeteile 18a - 18d, 18k sind beispielsweise an den Fahrzeug-Träger 11 angeschraubt, angeschweißt oder angeklebt. Sie können einen jeweiligen Fahrzeug-Träger 11, der vorzugsweise als ein Rohr, insbesondere Mehrkantrohr, ausgestaltet ist, auch durchsetzen oder an einer Seitenwand angeordnet sein. Beispielsweise sind zusätzliche Stützen 31 bei der Fahrzeug-Halterung 13a vorhanden, die beim Fahrbetrieb auftretende Kräfte optimal und an mehreren geometrisch voneinander entfernten Punkten auf den Fahrzeug-Träger 11 einleiten.

Das nachfolgende, beim Lastenträger-System 10b realisierte Rastund Sicherungskonzept könnte selbstverständlich nicht nur bei dem mit einem Spannanker diagonalen Verlauf versehenen Stecksystem zum Einsatz kommen, so z.B. auch bei dem Lastenträger-System 10a, sondern auch in anderer Form zusätzliche Sicherungselemente und Fixierelemente aufweisenden Systemen, z.B. in der Art des Lastenträger-Systems 10c. An der Fahrzeug-Halterung 13b ist nämlich ein Rastglied 32 vorgesehen, das in eine Rastaufnahme 76 am Steckvorsprung 63b einrasten kann. Das Rastglied 32 umfasst ein Federelement 33, das mit einem Halteabschnitt 34 am Aufnahmeteil 18b ortsfest festgelegt ist und von dem ein Rastabschnitt 35 federn absteht. Der Halteabschnitt 34 ist beispielsweise U-förmig, wobei seine Seitenschenkel, von denen einer in den Rastabschnitt 35 übergeht, in Aufnahmen 36 eines Halters 37 eingesetzt sind. Die Aufnahmen 36 sind an einem Stützschenkel 38 des Halters 37 angeordnet und voneinander abgewandt offen. Somit kann der U-förmige Halteabschnitt 34 quasi von der Seite her, d.h. in Richtung einer Längserstreckungsrichtung des Rastabschnitts 35 eingesteckt werden, so dass sich die Seitenschenkel des Halteabschnitts 34 in den Aufnahmen 36 abstützen. Der Stützschenkel 38 steht beispielsweise winkelig, z.B. rechtwinkelig, von einem Träger 39 ab, der in der Art eines Halteblechs ausgestaltet ist. Der Träger 39 ist mit dem Fahrzeug-Träger 11 und/oder der Fahrzeug-Halterung 13b verbunden, beispielsweise angeschweißt.

Der Rastabschnitt 35 steht in die Steckaufnahme 17b vor. Beispielsweise steht der Rastabschnitt 35 in eine Ausnehmung 40 am Aufnahmeteil 18b vor, so dass er tangential in der Steckaufnahme 17b angeordnet ist. Wenn der Steckvorsprung 63b in die Steckaufnahme 17b eingesteckt wird, verdrängt eine Schräge 77 am vorderen, freien Ende des Steckvorsprungs 63b den Rastabschnitt 35, der federnd ist, aus der Steckaufnahme 17b heraus. Der beispielsweise stabartige oder stangenartige Rastabschnitt 35 gleitet dann am Außenumfang des Steckvorsprunges 63b entlang, bis die Rastaufnahme 76 am Steckvorsprung 63b im Bereich in der Ausnehmung 40 zweckmäßigerweise geführten Federelement 33 bzw. Rastabschnitt 35 ist und somit der Rastabschnitt 35 federnd in die Rastaufnahme 76 einrasten kann. Der Rastabschnitt 35 bildet dann einen Anschlagabschnitt, da der Steckvorsprung 63b mit den Seitenwänden der Rastaufnahme 76 am Rastabschnitt 35 anschlägt. Somit kann also der Steckvorsprung 63b nicht mehr unabsichtlich aus der Steckaufnahme 17b heraus gelangen. Somit ist also eine Verrastung gegeben, die zugleich eine Sicherheitsfunktion erfüllt. Zudem ist das anschließende Spannen, beispielsweise Einhängen des Spannankers 67a oder 67b in das zugeordnete Widerlager 24a, 24b sehr einfach, da die Bauteile zueinander bereits vorpositioniert sind.

Zum Lösen kann der Bediener auf einen Betätigungsabschnitt 41 des Federelements 33 bzw. Rastglied 32 einwirken, der vor das Aufnahmeteil 18b vorsteht, wobei zweckmäßigerweise vorgesehen ist, dass der Betätigungsabschnitt 41 und der Halteabschnitt 34 an einander entgegengesetzten Seiten der Steckaufnahme 17b vorhanden sind.

Es versteht sich, dass das vorgestellte Rastkonzept und Sicherungskonzept exemplarisch ist, d.h. dass beispielsweise auch ein Rastbolzen oder Rastvorsprung vorgesehen sein kann, der federbeaufschlagt in seine Rast- oder Sicherungsstellung ist und beispielsweise durch Ziehen oder Drücken oder eine sonstige Betätigung aus seiner Rast- und Sicherungsstellung in eine Lösestellung bringbar ist.

Ein besonders einfaches Konzept zur Herstellung elektrischer Kontakte zwischen Kraftfahrzeug und Lastenträger ist in den Fig. 7 und 8 dargestellt.

Beispielsweise sind im Bereich der Querschnitt-Innenkontur 19 des Aufnahmeteils 18a oder 18b elektrische Kontakte vorgesehen, insbesondere an einem Kontaktträger 42. Das Aufnahmeteil 18a, 18b ist, wie gesagt hülsenartig, so dass der Kontaktträger 42 in den dadurch gebildeten Innenraum geschützt untergebracht werden kann.

Auch der Steckvorsprung 63a, 63b ist zweckmäßigerweise rohrartig oder hülsenartig, so dass auch dort ein Aufnahmeraum für einen Kontaktträger 78 vorhanden ist. Beim Stecken der Steckvorsprünge 63a, 63b in die Steckaufnahmen 17a, 17b gelangen die Kontakte an den Kontaktträgern 42, 78 miteinander in elektrische Verbindung. Beispielsweise sind die einen Kontakte als Kontaktvorsprünge, die anderen Kontakte als Kontaktbuchsen ausgestaltet oder weisen solche jeweils auf. Somit ist also beim Montieren des Lastenträgers 50a oder 50b sofort der elektrische Kontakt zwischen Kraftfahrzeug und Lastenträger hergestellt, insbesondere auch mehrpolig, so dass beispielsweise die Leuchten 59 ohne weitere Bedienhandlung mit dem Bordnetz des Kraftfahrzeugs 200 verbunden sind und genutzt werden können.

Zwar wäre auch bei dem Lastenträger-System 10a oder 10c-10k eine elektrische Kontaktierung wie in den Fig. 7 und 8 dargestellt möglich. Dort sind aber beispielsweise Steckdosen in der Art von Anhängersteckdosen zur Bereitstellung der elektrischen Kontakte 14 vorgesehen.

Der Steckvorsprung 63c und die Steckaufnahme 17c haben rechteckige oder quadratische Außen- und Innenkonturen. Beispielsweise ist die Steckaufnahme 17c an dem hülsenartig ausgestalteten Aufnahmeteil 18c vorgesehen. An dem Aufnahmeteil 18c ist ein außermittiger Längsanschlag 30 vorgesehen. Der Längsanschlag 30 und ein Widerlagerbereich bzw. Spannbereich des Aufnahmeteils 18c sind bezüglich der Steckachse 20 mit einem Längsabstand zueinander versehen, was ein gewisses Verkippen oder Verkanten im Sinne eines optimierten Verspannens vorteilhaft bewirken kann. Der Widerlagerbereich 43 ist beispielsweise an einer Stützhülse 44 angeordnet, die ihrerseits wiederum am freien Ende des Aufnahmeteils 18c verdrehsicher angeordnet ist, beispielsweise angeschweißt oder angeklebt oder angeschraubt. Auf die Stützhülse 44, die ein Gewinde aufweist, ist eine drehbar am Befestigungsarm 51c gelagerte Überwurfhülse 79 aufschraubbar, die auf das Gewinde an der Stützhülse 44 aufschraubbar ist. Die beiden Gewinde bilden Formschlusskonturen und Gegen-Formschlusskonturen.

Die Überwurfhülse 79 ist zwar drehbar und in einem gewissen Maß bezüglich der Steckachse 20, die insoweit auch eine Spannachse darstellt, verschieblich, jedoch nur bis zu einem nicht dargestellten Endanschlag. Dadurch ist es möglich, dass durch Aufschrauben der Überwurfhülse 79 auf die Stützhülse 44 der Befestigungsarm 51c an der Fahrzeug-Halterung 13c verspannt ist.

An dem Lastenträger-System 10c wird deutlich, dass ein Längsversatz zwischen Widerlagerbereich (Widerlagerbereich 43) und Längsanschlag (z.B. Längsanschlag 30) ein verbessertes Verspannen bewirkt, auch dann, wenn kein zur Steckachse diagonal wirkender Spannanker vorhanden ist, z.B. der Spannanker 67a oder 67b.

Desweiteren ist der Längsanschlag 30 bezüglich eines freien Endes der Steckaufnahme 17c bezüglich der Steckachse 20 axial versetzt. Zudem ist der Längsanschlag 30 oberhalb einer Horizontalebene angeordnet, unter der Stütz-Vorsprung 65 bzw. die Stütz-Aufnahme 21 sind, was auch einen Diagonal-Spanneffekt, mithin also ein Verkanten von Steckvorsprung und Steckaufnahme miteinander bewirkt. Somit ist ein optimaler Halt möglich.

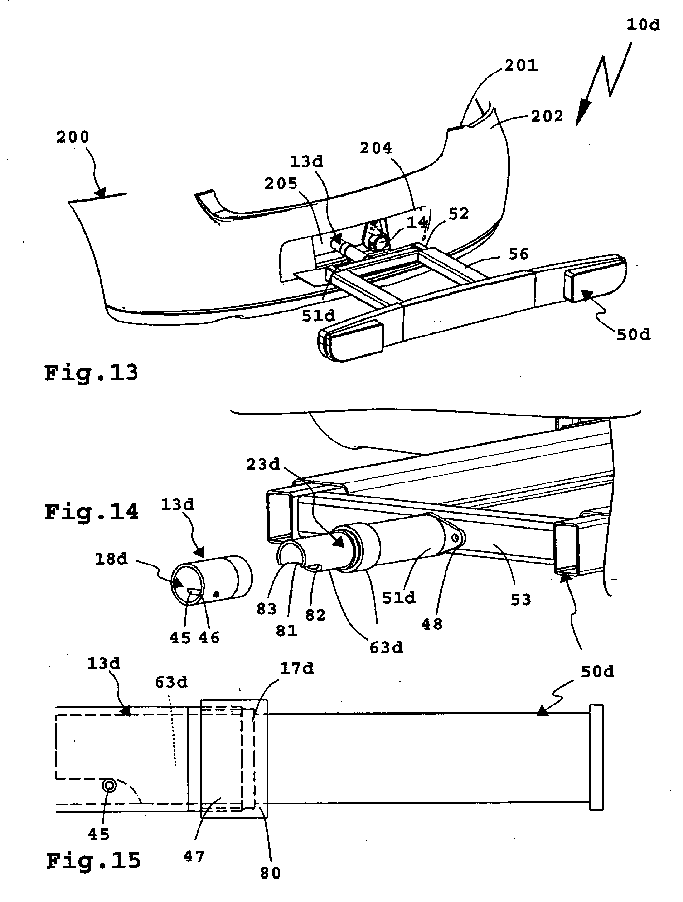

Bei dem Lastenträger-System 10d gemäß Fig. 13 - 15 ist ebenfalls eine Überwurfhülse vorgesehen, die am Befestigungsarm 51d drehbar und verschieblich gelagert ist. Der Steckvorsprung 63d ist ebenso wie die dazu passende Steckaufnahme 17d rund, beispielsweise kreisrund. Dadurch ist prinzipiell ein Verdrehen der beiden Bauteile relativ zueinander möglich. Allerdings ist am vorderen, freien Ende des Steckvorsprungs 63d eine Anschlagausnehmung 81 vorhanden, die nur einen Teilkreisumfang oder Teilumfang des Steckvorsprungs 63d umfasst. Somit bilden freie Umfangsstirnseiten der Anschlagausnehmung 81 Drehanschläge 83, die an einem Anschlagelement 45 im Inneren der Steckaufnahme 17d verdrehsicher anschlagen. Das Anschlagelement 45 bildet also einen Drehanschlag. Beispielsweise wird das Anschlagelement 45 von einem Querbolzen 46 gebildet, der in der Art einer Sekante positioniert ist. An die parallel zur Steckachse 20 verlaufenden Drehanschläge 83 schließt sich eine als Längsanschlag dienende Schräge 82 an. Wenn also der Steckvorsprung 63d in die Steckaufnahme 17d eingesteckt wird, gleitet die Schräge 82 am Anschlagelement 45 entlang und an dieser auch auf, so dass ein Verspannen der beiden Bauteile aneinander bewirkt wird, insbesondere dann, wenn die Überwurfhülse 80 auf ein Gewinde 47 am Aufnahmeteil 18d aufgeschraubt wird.

Das Gewinde 47 oder die Stützhülse 44 bilden ein Widerlager für die als Spannmutter dienende Überwurfhülse 79 oder 80. Anstelle von Schraubgewinden können selbstverständlich auch beispielsweise Bajonettkonturen, Spannschrägen, Klauen oder dergleichen vorgesehen sein.

Während der Befestigungsarm 51a, 51b beispielsweise mittels einer U-förmigen Aufnahme, in die der Querträger 53 eingreift, mit dem Grundträger 52 verbunden ist, ist der Befestigungsarm 51d beispielsweise mit einem Flansch 48 mit dem Querträger 53 verbunden.

Bei dem Lastenträger-System 10k haben die Steckaufnahme 17k und der Steckvorsprung 63k ähnliche Konturen wie die Steckaufnahme 17a, 17b und die Steckvorsprünge 63a, 63b. Ferner ist auch ein Spannanker vorhanden, nämlich ein Spannanker 67k, der allerdings nicht selbst ein Spannteil umfasst, sondern auf einen Spannarm 300 wirkt, der an einem freien Ende 301 ein Spannteil 302 bildet oder aufweist.

Vom Befestigungsarm 51k stehen z.B. plattenartige oder laschenartige Halteelemente 325 ab, die eine Aufnahme 326 zur Aufnahme des Querträgers 53 an ihren freien Enden halten. Die Halteelemente 325 erstrecken sich ausgehend vom Befestigungsarm 51k nach hinten unten, so dass der Lastenträger 50k eine relativ tiefe, fahrbahnnahe Position einnimmt.

Ein Rohrkörper 312, der die Steckaufnahme 63k umfasst, ist gegenüber dem Fahrzeug-Träger 11 bezogen auf eine Fahrbahnoberfläche höher angeordnet und wird durch ebenfalls plattenartige oder laschenartige Halteelemente 327 gehalten.

Der Spannanker 67k weist einen Zugstab 68 auf, der den Steckvorsprung 63k durchdringt. Der Zugstab 68 ist in einer Führungshülse 71 geführt. Die Führungshülse 71 ist beispielsweise an einer Oberseite des Steckvorsprungs 63k angeordnet und steht nach oben vor diesen vor. Der Zugstab 68 verläuft quer zur Steckachse 20, beispielsweise rechtwinkelig, wobei selbstverständlich auch Schrägverläufe, d.h. andere Winkel als ein rechter Winkel, möglich sind. An seinem nach unten vor den Steckvorsprung 63k vorstehenden Endbereich hat der Zugstab 68 ein Gewinde, das in eine Mutter 303 eingeschraubt ist.

Am anderen Längsendbereich des Zugstabs 68 ist ein Handgriff 304 angeordnet, mit dem der Zugstab 68 drehbetätigbar ist. Am Handgriff 304 ist ein Schloss 305 vorgesehen, mit dem eine Drehkoppelung des Handgriffs 304 mit dem Zugstab 68 herstellbar (Schloss 305 ist in Offenstellung) oder gelöst (Schloss 305 ist in Schließstellung) werden kann, so dass die Fixiermittel 23k mittels des Schlosses 305 verschließbar sind.

Der Handgriff 304 stützt sich an der Führungshülse 71 ab. Der Zugstab 68 durchdringt ferner den Spannarm 300 an einer Bohrung 306. Der Spannarm 300 ist zwischen der Mutter 303 und der Unterseite des Steckvorsprungs 63k angeordnet. Die Bohrung 306 ist so getroffen, dass der Spannarm 300 um den Zugstab 68 schwenken kann. Der Spannarm 300 liegt auf der Mutter 303 auf. Die Bohrung 306 ist etwa im Bereich einer Längsmitte des Spannarms 300 angeordnet.

An seinem dem freien Ende des Steckvorsprungs 63k zugewandte Endbereich hat der Spannarm 300 einen Haken 307, der das Spannteil 302 bildet. In einer Fixierstellung oder Eingreifstellung greift ein Hakenvorsprung 308 des Hakens 307 in eine Hakenaufnahme 309 an der Steckaufnahme 17k ein. Die Hakenaufnahme 309 bildet ein Widerlager 24k für das Spannteil 302. Wenn der Zugstab 68 aus der Mutter 303 ausgeschraubt wird, kommt der Spannarm 300 frei derart, dass das Spannteil 302, mithin der Haken 307, aus dem Widerlager 24k, also der Hakenaufnahme 309, heraus schwenken kann. Wenn der Spannanker 67k in Richtung seiner Spannstellung verstellt wird, der Zugstab 68 also in die Mutter 303 eingeschraubt wird, zieht der Zugstab 68 den Spannarm 300 in Richtung einer Umfangswand 310 des Steckvorsprungs 63k, beispielsweise dem unteren Stütz-Vorsprung 65. Dadurch wird zum einen bewirkt, dass der Hakenvorsprung 308 in die Hakenaufnahme 309 eindringt. Zudem wird der Hakenvorsprung 308 vorteilhaft auch von einem freien Ende 311 der Steckaufnahme 17k weg und somit der Steckvorsprung 63k in die Steckaufnahme 17k hinein gezogen, was ein Verspannen bewirkt.

Weiterhin ist es zweckmäßig, wenn am Hakenvorsprung 308 und/oder an der Hakenaufnahme 309 eine oder mehrere Spannschrägen 328 vorhanden sind, die im Sinne eines Hineinziehens des Steckvorsprungs 63k in die Steckaufnahme 17k wirken.

Das freie Ende 311 der Steckaufnahme 17k hat einen Schrägverlauf bezüglich der Steckachse 20. Ein unterer Teil 313 des Rohrkörpers 312 der Steckaufnahme 17k steht vor einen oberen Teil 314 des Rohrkörpers 312 bezüglich der Steckachse 20 vor. Am unteren Teil 313 ist das Widerlager 24k angeordnet. Der Rohrkörper 315 des Steckvorsprungs 63k kippt oder schwenkt also ein wenig um eine Innenkante des oberen Teils 314 des Rohrkörpers 312, wenn sein Längsanschlagbereich 75 am Längsanschlag 30 der Steckaufnahme 17k anschlägt und der Spannarm 300 durch den Spannanker 67k gespannt wird.

An dieser Stelle sei bemerkt, dass das Spannkonzept gemäß der Erfindung nicht nur bei polygonalen Querschnitten von Steckvorsprung und Steckaufnahme realisierbar ist, sondern auch beispielsweise bei runden Querschnitten, beispielsweise wie den Kupplungen der Systeme 10c, 10d.

Bevorzugt ist es, wenn der Spannarm 300 etwa parallel zum Rohrkörper 315, beispielsweise den Seitenwänden 66, verläuft. Ein Armabschnitt 316 des Spannarms 300 hat beispielsweise Seitenschenkel 317, die zueinander winkelig sind, etwa in demselben Winkel wie die Seitenwände 66 des Rohrkörpers 315.

Zwischen den Seitenschenkeln 317 und den Seitenwänden 66 können Stützkörper oder Lagerkörper 318 vorgesehen sein, zweckmäßigerweise um einen zumindest etwa parallelen Verlauf der Seitenschenkel 317 zu den Seitenwänden 66 herzustellen, wenn der Spannarm 300 seine Spannstellung einnimmt. Die optionalen Lagerkörper 318 sind beispielsweise an einem vom Spannteil 302 abgewandten Längsendbereich des Spannarms 300 vorgesehen.

Dort könnte auch ein Lagerelement 319 vorgesehen sein, um den Spannarm 300 zu lagern. Dann wäre beispielsweise die Lagerung mittels des Spannankers 67k nicht nötig. Das Lagerelement 319 wird beispielsweise von einer Schraube gebildet, die den Spannarm 300 an einer Bohrung 320 mit Bewegungsspiel durchdringt und in eine Bohrung 321 am Rohrkörper 315 eingeschraubt ist. Ein Durchmesser der Bohrung 320 ist jedenfalls kleiner als beispielsweise ein Kopf der Schraube bzw. des Lagerelements 319, so dass der Spannarm 300 auf diesem Schraubenkopf aufliegen kann.

Der Spannarm 300 kann also am Spannanker 67k und/oder dem Lagerelement 319 schwenkbar gelagert sein.

Zweckmäßig ist eine Federbelastung des Spannarms 300 in seine Eingreifstellung. Beispielsweise ist eine Feder 322 vorgesehen, die den Spannanker 67k in Richtung der Spannstellung beaufschlagt. Die Feder 322 ist zwischen dem Handgriff 304 und der Oberseite des Rohrkörpers 315 angeordnet, so dass sie durch Beaufschlagung des Handgriffs 304 den Zugstab 68 nach oben drückt und somit den Spannarm 300 in Richtung der Spannstellung indirekt beaufschlagt.

Ein bei den Lastenträger-Systemen 10a-10b bereits angedeutetes Steck-Konzept zur Herstellung elektrischer und/oder optischer Verbindungen zwischen dem Fahrzeug 200 und dem Lastenträger 50a, 50b ist auch beim Lastenträger-System 10k realisiert und kann in seiner speziellen, nachfolgend beschriebenen Ausprägung. Selbstverständlich auch bei den Lastenträger-Systemen 10a-10b verwendet werden.

An der Fahrzeug-Halterung 13k ist eine Fahrzeug-Kontakteinheit 340 mit Fahrzeug-Kontakten 341 vorhanden, die mit Lastenträger-Kontakten 371 einer Lastenträger-Kontakteinheit 370 in elektrischen Kontakt gelangen. Die Fahrzeug-Kontakte 341 umfassen Steckbuchsen 342 zur Aufnahme der als Steckkontakte 372 ausgestalteten Lastenträger-Kontakte 371. Selbstverständlich könnten auch die Lastenträger-Kontakte 371 als Steckbuchsen ausgestaltet sein oder Steckbuchsen umfassen, während auch die fahrzeugseitigen Kontakte einen oder mehrere Steckkontakte umfassen können.

Die Kontakte 341, 371 sind an Kontaktträgern 343, 373 angeordnet. Man kann die Kontaktträger 343, 373 auch als Halterungen bezeichnen.

Die Fahrzeug-Kontakteinheit 340 ist in einem Innenraum 323 der Steckaufnahme 17k angeordnet. Die Lastenträger-Kontakteinheit 370 hingegen ist in einem Innenraum 324 des Steckvorsprungs 63k, also im Rohrkörper 315, aufgenommen. Somit sind die Kontakteinheiten 340, 370 vor Umwelteinflüssen geschützt. Weiterhin treten sie quasi automatisch miteinander in Verbindung, wenn der Steckvorsprung 63k in die Steckaufnahme 17k eingesteckt wird.

Die Kontaktträger 343, 373 umfassen Trägerkörper 345, 375, in denen Aufnahmekammern 346, 376 für die Steckbuchsen 342 und die Steckkontakte 372 vorgesehen sind.

Die Steckbuchsen 342 sind mit ihren hinteren Abschnitten in den Aufnahmekammern 346 aufgenommen und werden dort vom Trägerkörper 345 gehalten. Vordere Abschnitte der Steckbuchsen 342 stehen in einen vorderen Abschnitt 348 eines Gehäuses 349 vor, das somit die Steckbuchsen 342 schützt. In dem vorderen Abschnitt 348 sind beispielsweise Aufnahmekammern 366 für die Steckbuchsen 342 vorgesehen.

Die Steckbuchsen 342 stehen nicht vor eine Stirnseite 347 des Gehäuses 349 vor. An dieser Stirnseite 347 sind beispielsweise Durchtrittsöffnungen vorhanden, durch die die Steckkontakte 372 in die Steckbuchsen 342 eindringen können.

Auch der Kontaktträger 343 vorteilhaft durch das Gehäuse 349 geschützt. Beispielsweise ist er in einer Aufnahme 367 an der Rückseite des Gehäuses 349 aufgenommen. Beispielsweise sind am Außenumfang des an sich zylindrischen Trägerkörpers 345 Rastnasen 368 vorhanden, die in zugeordnete Rastausnehmungen einer Umfangswand oder Stützwand 361 der Aufnahme 367 einrasten können.

Weiterhin sind Stütz- oder Führungskonturen zweckmäßig, die einen Kontaktträger einer erfindungsgemäßen Kontakteinheit im zugeordneten Gehäuse stützen oder führen. Beispielsweise sind am Außenumfang des Trägerkörpers 345 bzw. des Kontaktträger 343 einer oder mehrere Führungsvorsprünge 369 vorgesehen, so dass der Kontaktträger 343 drehwinkelrichtig in die Aufnahme 367 eingeführt werden kann, an der die Führungsvorsprünge 369 führende Führungsnuten vorgesehen sind. Selbstverständlich könnte der Kontaktträger 343 auch eine polygonale Außenumfangskontur aufweisen, die beispielsweise zur zumindest im Bereich einer Aufnahme 367 vorhandenen polygonalen Außenumfangskontur des Gehäuses 349 passt.

Der Kontaktträger 373 bildet ein Gehäuse für die Steckkontakte 372.

Die Steckkontakte 372 sind mit ihren hinteren Abschnitten 378 in den Aufnahmekammern 376 aufgenommen, wo auch die elektrische Kontaktierung mit teilweise dargestellten elektrischen Leitungen 399 vorgesehen ist. Vordere Abschnitte 379 der Steckkontakte 372 stehen nach vorn vor eine Stirnseite 377 des Kontaktträgers 373 vor. Die Aufnahmekammern 376 sind hinten mit Verschlusselementen 380 verschlossen, durch die die Leitungen 399 hindurchgeführt werden können, so dass sie dann im Innenraum 324 des Rohrkörpers 315 weiter verlaufen.

An den Stirnseiten 347, 377 der Kontaktträger 343, 373 sind zweckmäßigerweise Stützkonturen 381 zum Abstützen der vorderen Abschnitte 379 der Steckkontakte 372 vorgesehen.

Der Kontaktträger 373 und das Gehäuse 349 haben polygonale Außenumfänge 344, 374, passend zu den ebenfalls polygonalen Innenumfangskonturen der Innenräume 323, 324, in denen sie somit verdrehsicher aufgenommen sind. Die Außenumfänge 344 sind beispielsweise rechteckig oder quadratisch.

Der vordere Abschnitt 348 des Trägerkörpers 345 steht in den Innenraum 324 des Steckvorsprungs 63k vor, wenn dieser in die Steckaufnahme 17k eingesteckt ist. Die Steckkontakte 372 stehen nicht vor ein freies Ende des Steckvorsprungs 63k vor, sind also diesem gegenüber etwas zurückversetzt, so dass sie geschützt im Innenraum 324 angeordnet sind. Allerdings ragt der vordere Abschnitt 348 so weit in den Innenraum 324 hinein, dass die Steckkontakte 372 in die Steckbuchsen 342 mit ihren vorderen Abschnitten 379, den eigentlichen Steckabschnitten, eindringen können und in den Steckbuchsen 342 aufgenommen sind.

Dann liegen die Stützkonturen 381 vorteilhaft an der Stirnseite 347 an, sind jedenfalls nahe bei der Stirnseite 347. Dadurch gibt es zwischen den beiden Kontakteinheiten 340, 370 im aneinander gesteckten Zustand keine oder kaum freiliegende elektrische Kontaktflächen.

Die Verschlusselemente 380 bestehen beispielsweise aus Gummi oder elastischem Kunststoff, so dass die durch sie hindurch geführten elektrischen Leitungen dicht umschlossen sind. Weiterhin haben die Verschlusselemente 380 an ihrem Außenumfang Dichtkonturen 382, die im Sinne eines Abdichtens am Innenumfang der Aufnahmekammern 376 anliegen.

Der Trägerkörper 345 bzw. das Gehäuse 349 sind durch einen Deckel 350 verschlossen. Der Deckel 350 ist in einer Aufnahme 351 an der von der Einsteckseite der Steckbuchsen 342 abgewandten Seite, der Rückseite, des Gehäuses 349 aufgenommen.

Eine elektrische Verbindung der Steckbuchsen 342 mit elektrischen Leitungen 352 ist zweckmäßigerweise in der Aufnahme 351 vorgesehen, könnte aber selbstverständlich auch im Bereich der Aufnahmekammern 346 vorgesehen sein.

Die Leitungen 352 sind durch ein Anschlussstück 353 hindurchgeführt, das mit einer hinteren Wand 354 des Deckels 350 verbunden oder einstückig ist. Das Anschlussstück 353 verläuft winkelig zur Steckachse, in der die Steckkontakte 372 in die Steckbuchsen 342 eingesteckt werden, also entsprechend der Steckachse 20, vorliegend rechtwinkelig. Somit sind die Leitungen 352 nach hinten unten von der Fahrzeug-Kontakteinheit 340 weggeführt, was Platz sparend ist. Das Anschlussstück 353 ist zweckmäßigerweise als eine Kabeltülle und oder als Abknickschutz ausgestaltet.

Am Außenumfang des Deckels 350 ist zweckmäßigerweise eine vorteilhaft Dichtrillen oder Rippen umfassende Dichtung 355 vorgesehen, mit der sich der Deckel 350 am Innenumfang der Aufnahme 351 oder einer in der Aufnahme 351 vorgesehenen Stützwand 361 abstützt. Selbstverständlich könnte der Deckel 350 auch Rastnasen, Klemmvorsprünge oder dergleichen aufweisen, um mit dem Gehäuse 349 und/oder dem Kontaktträger 343 verbunden zu werden. Weiterhin könnte der Deckel auch verschraubt sein. Selbstverständlich kann auch an anderer Stelle eine Dichtung vorgesehen sein, die zwischen dem jeweiligen Deckel und dem Gehäuse oder Kontaktträger angeordnet ist und die innen liegenden elektrischen Bauteile schützt oder stützt.

Zweckmäßigerweise könnte in der Aufnahme 351 ein Steuergerät 356 angeordnet sein, das zur Steuerung der elektrischen Komponenten des Lastenträgers 50k und/oder zur elektrischen Anbindung des Lastenträgers 50k an einem Bordnetz des Kraftfahrzeugs 200 dient. Selbstverständlich wäre es auch möglich, bei oder an der Kontakteinheit 370 ein Steuergerät vorzusehen, das beispielsweise am oder im Kontaktträger 373 angeordnet sein könnte.

Vorliegend wird der Deckel 350 durch einen Rasthalter 357 am Gehäuse 349 gehalten. Der Rasthalter 357 umfasst einen Ringkörper 358, von dem Rastnasen 359 nach vorn abstehen. Die Rastnasen 359 rasten in Rastaufnahmen 360 am Gehäuse 349 ein. Die Rastaufnahmen 360 sind beispielsweise am Außenumfang der Aufnahme 351 vorgesehen. Die Rastnasen 359 sind zweckmäßigerweise in der Art von Haken ausgestaltet. Die Rastnasen 359 greifen beispielsweise in einen Zwischenraum zwischen der Stützwand 361 und einer Umfangswand der Aufnahme 351 ein. Der Ringkörper 358 liegt an einer Rückseite des Deckels 350 an, beispielsweise an der Wand 354. Die Rastnasen 359 stehen nach vorn vor eine Vorderseite des Deckels 350 vor.

Man könnte den Rasthalter 357 auch als eine Art Klammer bezeichnen. Jedenfalls ist ein einfaches Rastkonzept realisiert.

Weiterhin können beispielsweise für den Deckel 350 und den Rasthalter 357 verschiedene Materialien verwendet werden. So ist beispielsweise der Deckel 350 relativ elastisch und weist einstückig die (Umfangs-) Dichtung 355 und das Anschlussstück 353 auf, während der Rasthalter 357 aus vergleichsweise härterem, jedoch zumindest in Bezug auf die Rasthaken oder Rastnasen 359 elastischem Material, zum Beispiel Kunststoff, besteht.

Ein Außenumfang des Steckvorsprungs 63k und ein Innenumfang der Steckaufnahme 17k sind in erster Linie dafür ausgestaltet, dass diese beiden Komponenten formschlüssig aneinander anliegen. Außerdem ist es prinzipiell auch möglich, dass die beiden Komponenten zumindest während des Aneinandersteckens um ein gewisses Maß relativ zur Steckachse 20 verkippen, sich verkanten oder dergleichen. Dabei besteht die Gefahr, dass die Steckkontakte 372 sozusagen nicht in die Steckbuchsen 342 "hinein finden", so dass sie im Extremfall auch beschädigt werden können.

Hier schafft eine schwimmende Lagerung der Kontakte 341, 371 Abhilfe.

An den Außenumfängen 344, 374 des Gehäuses 349 und des Kontaktträgers 373 sind Dichtungen 363, 383 angeordnet. Die Dichtungen 363, 383 sind in Aufnahmen 364, 384, zum Beispiel Ringnuten, des Gehäuses 349 und des Kontaktträgers 373 bezüglich der Steckachse 20 ortsfest aufgenommen. Beispielsweise stehen Stützvorsprünge in der Art von Stütz-Flanschen nach radial außen vor, so dass die Dichtungen 363, 383 in die durch die Stützvorsprünge definierten Zwischenräume passen.

Die Dichtungen 363, 383 haben umfangsseitig Stützkonturen 365, 385 zur Abstützung an einem Innenumfang der Innenräume 323, 324. Die Stützkonturen 365, 385 sind beispielsweise als vorstehende Rippen 386 ausgestaltet, zwischen denen sich Rillen erstrecken. Die Stützkonturen 365, 385 erstrecken sich über den jeweiligen gesamten Außenumfang der Dichtungen 363, 383. Die Stützkonturen 365, 385 liegen mit ihren freien Stirnseiten an den Innenwänden der Innenumfangskonturen der Innenräume 323, 324 an, so dass diese stirnseitig jeweils dicht verschlossen sind.

Die Rippen 386 sind bezüglich der Steckachse 20 nachgiebig, so dass ein Körper der Dichtungen 363 und 383, von dem die Rippen 386 radial abstehen, in Richtung der Steckachse 20 linear hin und her bewegen kann. Somit sind auch die Fahrzeug-Kontakteinheit 340 und die Lastenträger-Kontakteinheit 370 linear bezüglich der Steckachse 20 beweglich gelagert. Die Fahrzeug-Kontakte 341 und die Lastenträger-Kontakte 371 können sich also linear bezüglich der Steckachse 20 bewegen.

Zudem sind die Rippen 386 quer zur Steckachse 20 nachgiebig, so dass sich die Kontaktträger 343, 373 quer zur Steckachse 20 bewegen können. Die Fahrzeug-Kontakte 341 und die Lastenträger-Kontakte 371 können sich daher quer zur Steckachse 20 bewegen.

Insgesamt ist also ein Toleranzausgleich durch die schwimmende Lagerung der Fahrzeug-Kontakte 341 und der Lastenträger-Kontakte 371 längs und quer zur Steckachse 20 möglich, so dass die Steckkontakte 372 relativ zu den Steckbuchsen 342 eine gewisse Beweglichkeit längs, quer und selbstverständlich auch schräg zur Steckachse 20 aufweisen und somit leicht in die Steckbuchsen 342 einführbar sind.

Die Dichtungen 363, 383 sind elastisch. Dadurch liegen sie sozusagen im Klemmsitz am Innenumfang der Innenräume 323, 324 an. Sie bilden also Klemmmittel.

Weiterhin sind zumindest die Außenumfänge der Dichtungen 363, 383 reibschlüssig, beispielsweise die Außenumfangskonturen der Rippen 386, so dass die Kontaktträger 343, 373 reibschlüssig in den Innenräumen 323, 324 aufgenommen sind.

Diese Maßnahmen können an sich schon ausreichen, um einen ausreichend festen Halt der Fahrzeug-Kontakteinheit 340 bzw. Lastenträger-Kontakteinheit 370 bezüglich der Fahrzeug-Halterung 13k bzw. des Befestigungsarms 51k zu erzielen. Beispielsweise wäre es denkbar, dass an den jeweiligen Rückseiten der Kontakteinheiten 340, 370 rückwärtige Stützkonturen 387 vorgesehen sind, die als Widerlager beim Aneinanderstecken wirken. Selbstverständlich können auch vorderseitig Stützkonturen 388 vorgesehen sein, die beim Lösen der Verbindung zwischen den Kontakteinheiten 340, 370 stützen.

Zwischen den Stützkonturen 387 und/oder 388 und der jeweiligen Kontakteinheit 340, 370, aber auch beispielsweise am radialen Außenumfang der jeweiligen Kontakteinheit, könnten beispielsweise eine oder mehrere Federn angeordnet sein. Exemplarisch ist eine Feder 362 zwischen der hinteren Stützkontur 381 und der Kontakteinheit 340 eingezeichnet.

Die Kontakteinheiten 340, 370 werden von Haltevorsprüngen 389 gehalten, die in Halteaufnahmen 390 der Fahrzeug-Kontakteinheit 340 und der Lastenträger-Kontakteinheit 370 eingreifen. Die Haltevorsprünge 389 stehen in die Innenräume 323, 324 vor. Beispielsweise werden die Haltevorsprünge 389 von Schraubbolzen, insbesondere Madenschrauben, gebildet, die durch Bohrungen 391 am Steckvorsprung 63k und der Steckaufnahme 17k geschraubt sind. Das ermöglicht eine einfache Montage. Nach dem Einschrauben werden die Haltevorsprünge 389 zweckmäßigerweise fixiert, beispielsweise mittels Lack, Klebstoff oder dergleichen, so dass sie sich nicht aus den Bohrungen 391 heraus bewegen können.

Die Halteaufnahmen 390 sind beispielsweise an den Trägerkörpern 345, 375 vorgesehen. Diese haben beispielsweise Haltevorsprünge 392. Die Haltevorsprünge 392 sind beispielsweise plattenartig. Die Haltevorsprünge 392 kommen an den Innenflächen der die Innenräume 323, 324 begrenzenden Wände zu liegen oder befinden sich bei diesen Innenflächen, wenn die Kontakteinheit und 340, 370 montiert sind. Die Haltevorsprünge 389 greifen mit einem Spiel in die Halteaufnahmen 390 ein, d.h. die Halteaufnahmen 390 haben quer und/oder längs zur Steckachse 20 eine größere Weite, insbesondere einen größeren Durchmesser, als der Steck-Querschnitt der Haltevorsprünge 389. Somit dienen die Haltevorsprünge 389 und die Halteaufnahmen 390 als Befestigungsmittel, die jedoch ein Spiel der Kontakteinheiten 340, 370 längs und quer zur Steckachse 20 zulassen.

Zwar wird bereits durch die polygonale Außenumfangsgestalt des Gehäuses 349 und des Kontaktträgers 373 eine Verdrehsicherung in den Innenräumen 323, 324 realisiert. Vorteilhaft wirken auch die Haltevorsprünge 389 und die Halteaufnahme 390 als Verdrehsicherung. Beispielsweise sind an mindestens zwei bezüglich der Steckachse 20 drehwinkelversetzt den Bereichen jeweils Haltevorsprünge 389 sowie zugeordnete Halteaufnahmen 390 an dem Gehäuse 349 und dem Kontaktträger 373 vorhanden, beispielsweise jeweils zwei einander gegenüberliegende oder um etwa 90°-180° drehwinkelversetzte Haltevorsprünge 389 sowie zugeordnete Halteaufnahmen 390.

Es versteht sich, dass ein solches Befestigungskonzept mit Spiel auch durch Rastmittel realisierbar ist. Beispielsweise könnten Rastvorsprünge 393 an dem Gehäuse 349 oder dem Kontaktträger 373 angeordnet sein, die mit einem Bewegungsspiel in Rastaufnahmen 394 am Innenumfang des Rohrkörpers 312 oder des Rohrkörpers 315 eingreifen.

Die Dichtung 363 kann bereits eine vorgeformte polygonale Umfangskontur haben, die zur Außenumfangskontur der Aufnahme 364 passt. Aufgrund der Elastizität der Dichtung 363 ist es aber auch möglich, dass sie die polygonal erst dann einnimmt, wenn sie in der Aufnahme 364 aufgenommen ist.

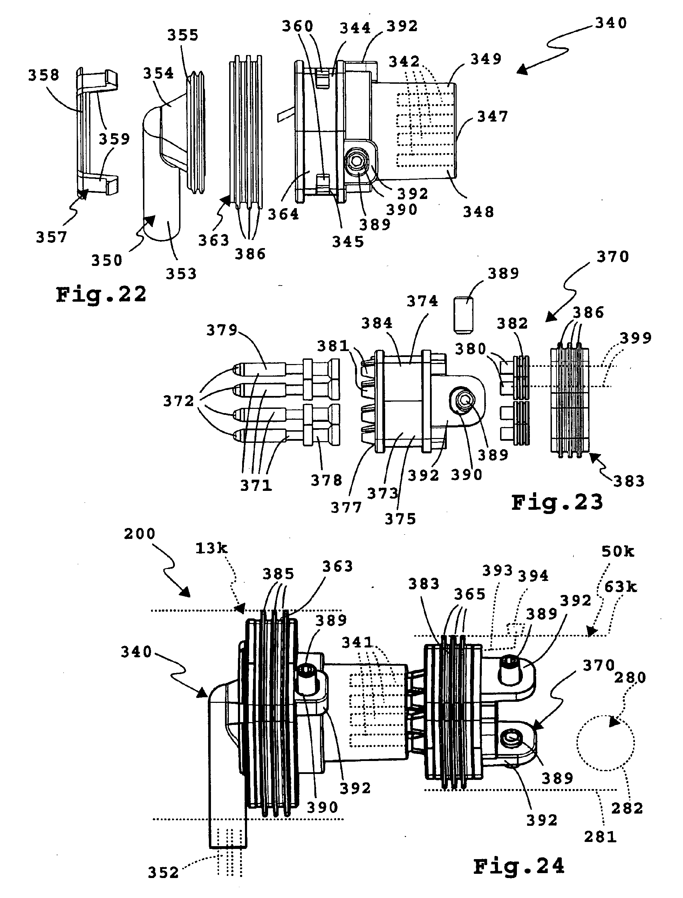

Es versteht sich, dass eine erfindungsgemäße Kontakteinheit, beispielsweise die Kontakteinheit 340 oder die Kontakteinheit 370, auch zur Ankopplung einer Anhängekupplung 280, die zum Beispiel eine Kugelstange umfasst, geeignet ist. Beispielsweise hat ein in Figur 24 angedeuteter Arm 281 einen Steckvorsprung, der in die Fahrzeug-Halterung 13k passt. Somit könnte beispielsweise anstelle des Lastenträgers 50k auch der Arm 281, der an seinem freien Ende beispielsweise einen Kugelkopf oder ein sonstiges Kupplungselement aufweist, am Fahrzeug 200 befestigt werden. In demArm 281 ist dann die Kontakteinheit 370 angeordnet, von der dann beispielsweise elektrische Leitungen für eine Anhängersteckdose 282 weg führen. Die Anhängersteckdose 282 ist vorzugsweise direkt an oder in dem Arm 281 angeordnet.

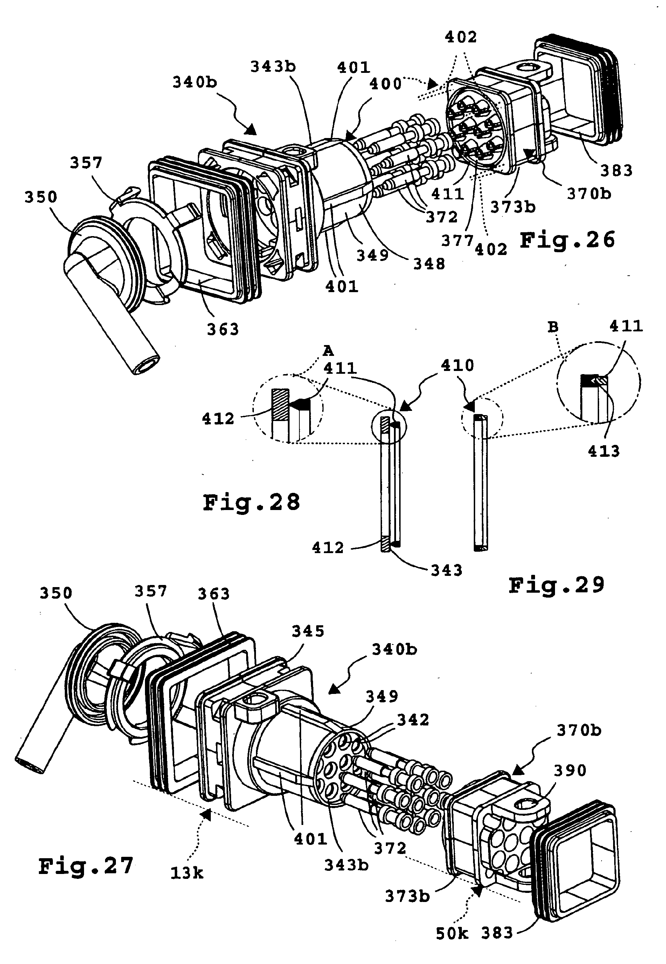

Die in den Figuren 26-28 dargestellte Kopplung bzw. das zugehörige elektrische Verbindungskonzept umfasst eine Fahrzeug-Kontakteinheit 340b und eine Lastenträger-Kontakteinheit 370b, die im Wesentlichen den Kontakteinheiten 340, 370 entsprechen. Insoweit also gleiche oder gleichartige Komponenten vorhanden sind, sind diese mit den gleichen Bezugsziffern versehen und nicht näher erläutert. Im Unterschied zu den Kontakteinheiten 340, 370 sind zusätzliche Führungsmaßnahmen und Dichtungsmaßnahmen getroffen, die das Anstecken des Lastenträgers 50k an der Fahrzeug-Halterung 13k erleichtern, indem nämlich die Kontakteinheiten 340b, 370b durch zusätzliche Führungsmaßnahmen "leichter zueinander finden" und im miteinander verbundenen Zustand im Sinne einer elektrischen Isolation dicht aneinander anschließen.

Am Kontaktträger 343 sind zweckmäßigerweise Führungsmittel 400 vorgesehen. Die Führungsmittel 400 umfassen beispielsweise eine Anordnung von Gleitrippen 401 oder Führungsvorsprüngen, die den Kontaktträger 343 führen, wenn er in den Innenraum 324 des Steckvorsprungs 63k eindringt. Die Gleitrippen 401 oder Führungsvorsprünge sind beispielsweise am Außenumfang des Kontaktträgers 343, vorzugsweise an dessen vorderem Abschnitt 348 bzw. am Gehäuse 349 angeordnet. Die Lagerung des Kontaktträgers 343 mit Spiel relativ zur Fahrzeug-Halterung 13k, d.h. mit Spiel bezüglich des Aufnahmeteils 18k, trägt vorteilhaft dazu bei, dass der Kontaktträger 343 mit seinen Gleitrippen 401 oder Führungsvorsprüngen sozusagen ideal in die Innenkontur des Befestigungsarms 51k hinein findet, so dass die Steckbuchsen 342 passend zu den Steckkontakten 372 positioniert sind und die Steckkontakte 372 in die Steckbuchsen 342 optimal hinein gelangen können. Aufgrund der Führungsmittel 400 kommt es also nicht darauf an, dass die Kontakteinheiten 340b und 370b relativ zu den sie aufnehmenden mechanischen Bauteilen der Kupplung des Lastenträgersystems 10k justiert werden, also relativ zum Aufnahmeteil 18k und zum Befestigungsarm 51k. Die Führungsmittel 400 führen also die beiden Kontakteinheiten 340b und 370b, insbesondere deren Kontaktträger 343b, 373b, beim Stecken des Befestigungsarms 51k an bzw. in das Aufnahmeteil 18k.

Selbstverständlich ist es auch möglich, dass bei einer Lastenträger-Kontakteinheit Führungsmittel vorgesehen sind. So sind beispielsweise an der Kontakteinheit 370b Führungsvorsprünge 402 vorgesehen, die in der Art einer Führungsaufnahme oder eines Korbes ausgestaltet sind derart, dass sie den vorderen Abschnitt 348 des Kontaktträgers 343 führen und aufnehmen. Die Führungsvorsprünge 402 stehen beispielsweise vor die vordere Stirnseite 377 des Kontaktträgers 373 vor, vorzugsweise am Außenumfang, insbesondere den Eckbereichen, da beim Ausführungsbeispiel eine polygonale außen Kontur vorhanden ist. Selbstverständlich kommt es darauf nicht an, d.h. auch andere Führungsvorsprünge, z.B. im Sinne eines vor die Stirnseite 377 des Kontaktträgers 373 vorstehenden Führungsdorns, sind möglich.

Es versteht sich, dass alternativ auch Führungsmittel beispielsweise an den tragenden Bauteilen der Kupplung des Lastenträger-Systems gemäß der Erfindung vorgesehen sein können. So könnten beispielsweise an der Steckaufnahme 17 innen seitig Gleitrippen oder Führungsvorsprünge vorgesehen sein, die einen in die Steckaufnahme hineingleitenden Kontaktträger führen. Mithin ist es also auch möglich, dass die Führungsmittel abseits der jeweiligen Kontakteinheit sind, also von dieser separat.

Eine Dichtungsanordnung 410 trägt zu einem dichten Sitz der Kontakteinheiten 340b und 370b bei. Die Dichtungsanordnung 410 wirkt im Sinne eines Abdichtens der Steckbuchsen 342 und der Steckkontakte 372, wenn diese ineinander gesteckt sind. Beispielsweise umfasst die Dichtungsanordnung 410 einen Dichtvorsprung 411, der an der Stirnseite 377 des Kontaktträgers 373 angeordnet ist. Der Dichtvorsprung 411 verläuft um die Steckkontakte 372 herum. Der Dichtvorsprung 411 ist also ringförmig.

Der Dichtvorsprung 411 drückt beispielsweise in eine Ringdichtung 412, die die Steckbuchsen 342 umgibt. Beispielsweise ist an der Stirnseite 347 des Kontaktträgers 343 ein entsprechender ringförmiger Abschnitt vorhanden oder eine Aufnahme, in die Ringdichtung 412 eingelegt, eingespritzt, eingeklebt oder dergleichen vorhanden ist. Wenn also die Kontaktträger 343, 373 stirnseitig aneinander anliegen, drückt der Dichtvorsprung 411 in die Ringdichtung 412 hinein. Vorzugsweise ist am Dichtvorsprung 411 eine Spitze ausgebildet, die in die elastischen nachgiebigen Stirnseite 347 bzw. die Ringdichtung 412 im Sinne eines Abdichtens eindringt.

Selbstverständlich könnte anstelle oder in Ergänzung der Ringdichtung 412 auch eine ringförmige Nut oder eine Dichtaufnahme 413 vorhanden sein. Das ist in Figur 29 dargestellt.

Weiterhin ist es bei einer erfindungsgemäßen Kupplung bzw. Kontakteinheit vorteilhaft, wenn ein Dichtungslabyrinth vorhanden ist.

## Patentansprüche

1. Kupplung für ein Lastenträger-System für ein Kraftfahrzeug (200), mit einer Fahrzeug-Halterung (13a -13d, 13k) zur Befestigung an einem Heck (201) des Kraftfahrzeugs (200) und mit einem zur Befestigung an der Fahrzeug-Halterung (13a -13d, 13k) vorgesehenen Befestigungsarm (51a-51d, 51k) eines Lastenträgers (50a-50d, 50k), der einen Tragbereich zum Tragen einer Last aufweist, von dem der Befestigungsarm (51a-51d, 51k) zur Befestigung an der Fahrzeug-Halterung (13a -13d, 13k) absteht, wobei an der mindestens einen Fahrzeug-Halterung (13a -13d, 13k) und dem mindestens einen Befestigungsarm (51a-51d, 51k) Steckmittel zum Anstecken des mindestens einen Befestigungsarms (51a-51d, 51k) an die mindestens eine Fahrzeug-Halterung (13a -13d, 13k) entlang einer Steckachse (20) vorgesehen sind, wobei die Steckmittel eine Steckaufnahme (17a-17d, 17k) und einen Steckvorsprung (63a-63d, 63k) umfassen, an denen eine Fahrzeug-Kontakte (341) umfassende Fahrzeug-Kontakteinheit (340) der Fahrzeug-Halterung (13a - 13d, 13k) und eine Lastenträger-Kontakte (371) umfassende Lastenträger-Kontakteinheit (370) des Lastenträgers zur Herstellung einer elektrischen und/oder optischen Verbindung zwischen dem Kraftfahrzeug (200) und dem Lastenträger vorgesehen sind, **dadurch gekennzeichnet, dass** sie Befestigungsmittel zum Befestigen der Fahrzeug-Kontakte (341) an der Fahrzeug-Halterung (13a -13d, 13k) und/oder Lastenträger-Kontakte (371) an dem Befestigungsarm (51a-51d, 51k) mit einem Spiel längs und/oder quer zu der Steckachse (20) aufweist.

2. Kupplung nach Anspruch 1, **dadurch gekennzeichnet, dass** die Fahrzeug-Kontakte (341) der Fahrzeug-Kontakteinheit (340) und/oder die Lastenträger-Kontakte (371) der Lastenträger-Kontakteinheit (370) an einem Kontaktträger (343; 373) und/oder in einem Gehäuse (349) angeordnet sind.

3. Kupplung nach Anspruch 2, **dadurch gekennzeichnet, dass** die Kontakte an dem Kontaktträger (343; 373) oder in dem Gehäuse (349) mit zumindest einem Teil des Spiels längs und/oder quer zu der Steckachse (20) gehaltert oder aufgenommen sind und/oder dass die Fahrzeug-Kontakte (341) oder die Lastenträger-Kontakte (371) an dem Kontaktträger (343; 373) angeordnet sind und der Kontaktträger (343; 373) in dem Gehäuse (349) mit zumindest einem Teil des Spiels längs und/oder quer zu der Steckachse (20) und/oder verdrehsicher gehaltert oder aufgenommen ist, wobei der Kontaktträger (343; 373) zweckmäßigerweise eine polygonale Außenumfangskontur aufweist, die zu einer polygonalen Innenumfangskontur einer Aufnahme des Gehäuses (349) für den Kontaktträger (343; 373) passt.

4. Kupplung nach einem der Ansprüche 2 oder 3, **dadurch gekennzeichnet, dass** der Kontaktträger (343; 373) oder das Gehäuse (349) einen Deckel (350) aufweist, durch den zu den Fahrzeug-Kontakten (341) oder den Lastenträger-Kontakten (371) führende Leitungen hindurchgeführt sind, wobei der Deckel (350) zweckmäßigerweise mit dem Kontaktträger (343; 373) oder dem Gehäuse (349) verrastet ist, insbesondere mittels eines Rasthalters (357), der an einer von den Kontakten abgewandten Rückseite des Deckels (350) an diesem anliegt und von dem mindestens ein Rasthaken insbesondere bis zu einer Vorderseite des Deckels (350) absteht und in den Kontaktträger (343; 373) oder das Gehäuse (349) eingreift.

5. Kupplung nach einem der vorhergehenden Ansprüche, **dadurch gekennzeichnet, dass** die Fahrzeug-Kontakteinheit (340) und die Lastenträger-Kontakteinheit (370) in einem Innenraum der Steckaufnahme (17a-17d, 17k) und in einem Innenraum des Steckvorsprungs (63a-63d, 63k) angeordnet sind und/oder dass die Befestigungsmittel mindestens einen Haltevorsprung (389) umfassen, der vor eine Wand der Steckaufnahme oder des Steckvorsprungs in den jeweiligen Innenraum vorsteht und in eine Halteaufnahme (390) der Fahrzeug-Kontakteinheit (340) oder der Lastenträger-Kontakteinheit (370) mit einem Spiel längs und/oder quer zu der Steckachse (20) eingreift, wobei der Haltevorsprung (389) vorteilhaft eine Schraube oder einen Steckbolzen umfasst, der die Wand der Steckaufnahme oder des Steckvorsprungs durchdringt, wobei der Haltevorsprung (389) vorteilhaft durch Fixiermittel, zum Beispiel Klebstoff, Lack oder dergleichen, ortsfest an der Wand der Steckaufnahme oder des Steckvorsprungs festgelegt ist.

6. Kupplung nach einem der vorhergehenden Ansprüche, **dadurch gekennzeichnet, dass** die Steckaufnahme (17a-17d, 17k) und/oder der Steckvorsprung (63a-63d, 63k) einen Rohrabschnitt (312; 315) umfassen, und dass die Fahrzeug-Kontakteinheit (340) und/oder die Lastenträger-Kontakteinheit (370) an einem Innenumfang des jeweiligen Rohrabschnitts (312; 315) dichtend anliegen und den Rohrabschnitt (312; 315) im Querschnitt, insbesondere stirnseitig, verschließen und/oder mit einer Dichtungsanordnung oder mit einer Dichtung (363, 383), insbesondere einer Ringdichtung, versehen sind, die an dem Innenumfang des jeweiligen Rohrabschnitts (312; 315) anliegt.

7. Kupplung nach einem der vorhergehenden Ansprüche, **dadurch gekennzeichnet, dass** die Befestigungsmittel mindestens eine, insbesondere als Dichtung (363, 383) ausgestaltete oder an einer Dichtung (363, 383) angeordnete, Reibschlussfläche zum reibschlüssigen Halt der Fahrzeug-Kontakteinheit (340) an der Fahrzeug-Halterung (13a -13d, 13k) oder der Lastenträger-Kontakteinheit (370) an dem Befestigungsarm (51a-51d, 51k), insbesondere in der Steckaufnahme (17a-17d, 17k) oder dem Steckvorsprung (63a-63d, 63k), mit einem Spiel längs und/oder quer zu der Steckachse (20) aufweist.

8. Kupplung nach einem der vorhergehenden Ansprüche, **dadurch gekennzeichnet, dass** die Fahrzeug-Kontakte (341), insbesondere die Fahrzeug-Kontakteinheit (340), und/oder die Lastenträger-Kontakte, insbesondere die Lastenträger-Kontakteinheit (370), in einem insbesondere eine Dichtung (363, 383) umfassenden elastischen Körper in der Steckaufnahme (17a-17d, 17k) oder dem Steckvorsprung (63a-63d, 63k) mit einem Spiel längs und/oder quer zu der Steckachse (20) aufgenommen sind.

9. Kupplung nach einem der vorhergehenden Ansprüche, **dadurch gekennzeichnet, dass** die Befestigungsmittel Klemmmittel zum Verklemmen der Fahrzeug-Kontakteinheit (340) an der Fahrzeug-Halterung (13a -13d, 13k) und/oder zum Verklemmen der Lastenträger-Kontakteinheit (370) mit dem Befestigungsarm (51a-51d, 51k), insbesondere in der Steckaufnahme (17a-17d, 17k) oder dem Steckvorsprung (63a-63d, 63k), mit einem Spiel längs und/oder quer zu der Steckachse (20) umfassen, wobei die Klemmmittel vorzugsweise mindestens einen Klemmvorsprung umfassen, der eine am Außenumfang der Fahrzeug-Kontakteinheit (340) oder der Lastenträger-Kontakteinheit (370) angeordnete Dichtung (363, 383) oder Dichtfläche in Richtung eines Innenumfangs der Steckaufnahme (17a-17d, 17k) oder des Steckvorsprungs (63a-63d, 63k) belastet, und/oder dass die Befestigungsmittel Rastmittel zum Verrasten der Fahrzeug-Kontakteinheit (340) an der Fahrzeug-Halterung (13a -13d, 13k) und/oder zum Verrasten der Lastenträger-Kontakteinheit (370) mit dem Befestigungsarm (51a-51d, 51k), insbesondere in der Steckaufnahme (17a-17d, 17k) oder dem Steckvorsprung (63a-63d, 63k), mit einem Spiel längs und/oder quer zu der Steckachse (20) umfassen, wobei die Rastmittel vorteilhaft einen innen an der Steckaufnahme (17a-17d, 17k) oder innen an dem Steckvorsprung (63a-63d, 63k) vorgesehenen Rastvorsprung (393) oder eine Rastaufnahme (394) zum Verrasten mit einer Rastaufnahme (394) oder einem Rastvorsprung (393) an der Fahrzeug-Kontakteinheit (340) oder der Lastenträger-Kontakteinheit (370) umfassen.

10. Kupplung nach einem der vorhergehenden Ansprüche, **dadurch gekennzeichnet, dass** sie Führungsmittel (400) zum Führen der Fahrzeug-Kontakteinheit (340) und/oder der Lastenträger-Kontakteinheit (370) beim Stecken des Befestigungsarms (51a-51d, 51k) an oder in die Fahrzeug-Halterung (13a -13d, 13k) aufweist, wobei die Führungsmittel (400) zweckmäßigerweise mindestens eine Gleitrippe (401) und/oder mindestens einen Führungsvorsprung (402) umfassen.

11. Kupplung nach Anspruch 10, **dadurch gekennzeichnet, dass** die mindestens eine Gleitrippe (401) oder der mindestens eine Führungsvorsprung (402) an einem Außenumfang der Fahrzeug-Kontakteinheit (340) und/oder der Lastenträger-Kontakteinheit (370) oder eines Gehäuses (349, 379) oder eines Kontaktträgers (343b, 373b) angeordnet ist und sich die mindestens eine Gleitrippe (401) oder der mindestens eine Führungsvorsprung (402) an dem Befestigungsarm (51a-51d, 51k) oder der Fahrzeug-Halterung (13a-13d, 13k) abstützen, wenn diese ineinander gesteckt sind, und/oder dass der mindestens eine Führungsvorsprung (402) oder die mindestens eine Gleitrippe (401) vor einen Grundkörper, insbesondere ein Gehäuse, der Fahrzeug-Kontakteinheit (340) und/oder der Lastenträger-Kontakteinheit (370) vorsteht und die Fahrzeug-Kontakteinheit (340) und die Lastenträger-Kontakteinheit (370) beim Aneinanderstecken des Befestigungsarms (51a-51d, 51k) und der Fahrzeug-Halterung (13a -13d, 13k) in einem Sinne zueinander hin führt, insbesondere im Sinne eines zentrierens.

12. Kupplung nach einem der vorhergehenden Ansprüche, **dadurch gekennzeichnet, dass** an der Fahrzeug-Kontakteinheit (340) und/oder der Lastenträger-Kontakteinheit (370) eine Dichtungsanordnung (410) zum Abdichten der Fahrzeug-Kontakte (341) und der Lastenträger-Kontakte (371) angeordnet ist, wenn die Fahrzeug-Kontakteinheit (340) und die Lastenträger-Kontakteinheit (370) in Kontakt miteinander sind, wobei die Dichtungsanordnung (410) zweckmäßigerweise eine an einer Stirnseite (347, 377) der Fahrzeug-Kontakteinheit (340) und/oder der Lastenträger-Kontakteinheit (370) angeordnete elastische Dichtung, insbesondere eine Ringdichtung (412), und/oder einen Vorsprung (411) zum Eindringen in eine insbesondere elastische Dichtfläche am jeweils anderen Bauteil und/oder eine Dichtaufnahme (413) umfasst.

13. Kupplung nach einem der vorhergehenden Ansprüche oder dem Oberbegriff des Anspruchs 1, **dadurch gekennzeichnet, dass** die Befestigungsmittel eine Federanordnung (387) umfassen, die die Fahrzeug-Kontakteinheit (340) und/oder die Lastenträger-Kontakteinheit (370) in Richtung der jeweils anderen Kontakteinheit (370, 340) und/oder in Richtung einer Mittelposition quer zur Steckachse (20) belastet, und/oder dass mindestens eine Kontakteinheit (340, 370) eine polygonale Außenumfangskontur zur verdrehsicheren Befestigung an einer zu der Außenumfangskontur passenden polygonalen Innenumfangskontür eines Innenraums der Steckaufnahme (17a-17d, 17k) oder des Steckvorsprungs (63a-63d, 63k) aufweist.

14. Lastenträger (50a-50d, 50k) oder Kraftfahrzeug oder Anhängekupplung (280) mit einer Kupplung nach einem der vorhergehenden Ansprüche.

15. Kontakteinheit (340, 370) für eine Kupplung eines Lastenträger-Systems oder einer Anhängekupplung (280) eines Kraftfahrzeugs(200), wobei die Kupplung eine Fahrzeug-Halterung (13a -13d, 13k) zur Befestigung an einem Heck (201) des Kraftfahrzeugs (200) und einen zur Befestigung an der Fahrzeug-Halterung (13a -13d, 13k) vorgesehenen Befestigungsarm (51a-51d, 51k) eines Lastenträgers (50a-50d, 50k) oder einer Anhängekupplung (280) aufweist und Steckmittel zum Anstecken des mindestens einen Befestigungsarms (51a-51d, 51k) an die mindestens eine Fahrzeug-Halterung (13a -13d, 13k) entlang einer Steckachse (20) vorgesehen sind, wobei die Steckmittel eine Steckaufnahme (17a-17d, 17k) und einen Steckvorsprung (63a-63d, 63k) umfassen, an denen die Fahrzeug-Kontakte (341) oder Lastenträger-Kontakte (371) umfassende Kontakteinheit (340, 370) zur Herstellung einer elektrischen und/oder optischen Verbindung zwischen dem Kraftfahrzeug (200) und dem Lastenträger oder der Anhängekupplung (280), insbesondere eines Kupplungsarms der Anhängekupplung (280), vorgesehen sind, **dadurch gekennzeichnet, dass** sie Befestigungsmittel zum Befestigen der Fahrzeug-Kontakte (341) an der Fahrzeug-Halterung (13a -13d, 13k) oder an dem Befestigungsarm (51a-51d, 51k) mit einem Spiel längs und/oder quer zu der Steckachse (20) und/oder eine polygonale Außenumfangskontur zur verdrehsicheren Befestigung an einer zu der Außenumfangskontur passenden polygonalen Innenumfangskontur eines Innenraums der Steckaufnahme (17a-17d, 17k) oder des Steckvorsprungs (63a-63d, 63k) aufweist.

## Claims

1. Coupling for a load carrier system for a motor vehicle (200), with a vehicle mounting (13a-13d, 13k) for fixing to a rear (201) of the motor vehicle (200) and with a fastening arm (51a-51d, 51k) of a load carrier (50a-50d, 50k) provided for attaching to the vehicle mounting (13a-13d, 13k) and which has a carrying area for carrying a load and from which the fastening arm (51a-51d, 51k) for attaching to the vehicle mounting (13a-13d, 13k) protrudes, wherein there are provided, on the vehicle mounting or mountings (13a-13d, 13k) and the fastening arm or arms (51a-51d, 51k), plug means for attaching the fastening arm or arms (51a-51d, 51k) to the vehicle mounting or mountings (13a-13d, 13k) along an insertion axis (20), wherein the plug means comprise a plug-in socket (17a-17d, 17k) and a plug projection (63a-63d, 63k) on which are provided a vehicle contact unit (340) of the vehicle mounting (13a-13d, 13k) comprising vehicle contacts (341) and a load carrier contact unit (370) of the load carrier comprising load carrier contacts (371) to create an electrical and/or optical connection between the motor vehicle (200) and the load carrier, **characterised in that** it has fastening means for attaching the vehicle contacts (341) to the vehicle mounting (13a-13d, 13k) and/or load carrier contacts (371) to the fastening arm (51a-51d, 51k) with play along and/or across the insertion axis (20).

2. Coupling according to claim 1, **characterised in that** the vehicle contacts (341) of the vehicle contact unit (340) and/or the load carrier contacts (371) of the load carrier contact unit (370) are mounted on a contact carrier (343; 373) and/or in a housing (349).

3. Coupling according to claim 2, **characterised in that** the contacts on the contact carrier (343; 373) or in the housing (349) are held or accommodated with at least a portion of the play along and/or across the insertion axis (20), and/or that the vehicle contacts (341) or the load carrier contacts (371) are mounted on the contact carrier (343; 373) and the contact carrier (343; 373) is mounted or held in the housing (349) with at least a portion of the play along and/or across the insertion axis (20) and/or anti-twist locked, wherein the contact carrier (343; 373) expediently has a polygonal outer peripheral contour which matches a polygonal inner peripheral contour of a seating in the housing (349) for the contact carrier (343; 373).

4. Coupling according to one of claims 2 or 3, **characterised in that** the contact carrier (343; 373) or the housing (349) has a cover (350), through which are fed electrical lines leading to the vehicle contacts (341) or the load carrier contacts (371), wherein the cover (350) is expediently latched to the contact carrier (343; 373) or the housing (349), in particular by means of a latching holder (357) which fits up against a rear of the cover (350) facing away from the contacts and protrudes from the latching hook or hooks in particular as far as a front of the cover (350) and engages in the contact carrier (343; 373) or the housing (349).

5. Coupling according to any of the preceding claims, **characterised in that** the vehicle contact unit (340) and the load carrier contact unit (370) are located in an interior of the plug-in socket (17a-17d, 17k) and in an interior of the plug projection (63a-63d, 63k) and/or that the fastening means comprise at least one retaining projection (389) which protrudes into the respective interior in front of a wall of the plug-in socket or the plug projection and engages in a retaining socket (390) of the vehicle contact unit (340) or the load carrier contact unit (370) with play along and/or across the insertion axis (20), wherein the retaining projection (389) advantageously comprises a bolt or a plug bolt which penetrates the wall of the plug-in socket or the plug projection, wherein the retaining projection (389) is fixed advantageously by fixing means, for example adhesive, paint or the like, immovably to the wall of the plug-in socket or the plug projection.

6. Coupling according to any of the preceding claims, **characterised in that** the plug-in socket (17a-17d, 17k) and/or the plug projection (63a-63d, 63k) include a tubular section (312; 315), and that the vehicle contact unit (340) and/or the load carrier contact unit (370) make sealing contact with an inner periphery of the respective tubular section (312; 315) and that the tubular sections (312; 315) in cross-section, in particular at their end faces, seal and/or are provided with a seal assembly or with a seal (363, 383), in particular a ring seal, which is in contact with the inner periphery of the respective tubular section (312; 315).

7. Coupling according to any of the preceding claims, **characterised in that** the fastening means have at least one frictional connection face, in particular in the form of a seal (363, 383) or provided on a seal (363, 383), for frictional holding of the vehicle contact unit (340) to the vehicle mounting (13a-13d, 13k) or the load carrier contact unit (370) to the fastening arm (51a-51d, 51k), in particular in the plug-in socket (17a-17d, 17k) or the plug projection (63a-63d, 63k), with play along and/or across the insertion axis (20).

8. Coupling according to any of the preceding claims, **characterised in that** the vehicle contacts (341), in particular the vehicle contact unit (340), and/or the load carrier contacts, in particular the load carrier contact unit (370), are accommodated in an elastic body, in particular comprising a seal (363, 383), in the plug-in socket (17a-17d, 17k) or the plug projection (63a-63d, 63k), with play along and/or across the insertion axis (20).

9. Coupling according to any of the preceding claims, **characterised in that** the fastening means comprise clamping means for clamping the vehicle contact unit (340) to the vehicle mounting (13a-13d, 13k) and/or for clamping the load carrier contact unit (370) to the fastening arm (51a-51d, 51 k), in particular in the plug-in socket (17a-17d, 17k) or the plug projection (63a-63d, 63k), with play along and/or across the insertion axis (20), wherein the clamping means preferably include at least one clamping projection, which biases a seal (363, 383) or sealing surface provided on the outer periphery of the vehicle contact unit (340) or the load carrier contact unit (370) towards an inner periphery of the plug-in socket (17a-17d, 17k) or the plug projection (63a-63d, 63k), and/or that the fastening means include latching means for latching the vehicle contact unit (340) to the vehicle mounting (13a-13d, 13k) and/or for latching the load carrier contact unit (370) to the fastening arm (51a-51d, 51k), in particular in the plug-in socket (17a-17d, 17k) or the plug projection (63a-63d, 63k), with play along and/or across the insertion axis (20), wherein the latching means advantageously include a latching projection (393) or a latching recess (394) provided on the inside of the plug-in socket (17a-17d, 17k) or on the inside of the plug projection (63a-63d, 63k), for latching with a latching recess (394) or a latching projection (393) on the vehicle contact unit (340) or the load carrier contact unit (370).

10. Coupling according to any of the preceding claims, **characterised in that** it has guide means (400) for guiding the vehicle contact unit (340) and/or the load carrier contact unit (370) during insertion of the fastening arm (51a-51d, 51k) on to or into the vehicle mounting (13a-13d, 13k), wherein the guide means (400) expediently include at least one slide rib (401) and/or at least one guide projection (402).

11. Coupling according to claim 10, **characterised in that** the slide rib or ribs (401) and the guide projection or projections (402) is or are located on an outer periphery of the vehicle contact unit (340) and/or the load carrier contact unit (370) or a housing (349, 379) or a contact carrier (343b, 373b) and that the slide rib or ribs (401) or the guide projection or projections (402) rest on the fastening arm (51a-51d, 51 k) or the vehicle mounting (13a-13d, 13k) when these are plugged together, and/or that the guide projection or projections (402) or the slide rib or ribs (401) protrudes or protrude beyond a base body, in particular a housing, of the vehicle contact unit (340) and/or the load carrier contact unit (370) and guides or guide the vehicle contact unit (340) and the load carrier contact unit (370) towards one another on plugging together of the fastening arm (51a-51d, 51k) and the vehicle mounting (13a-13d, 13k) in one direction, in particular in the direction of centring.

12. Coupling according to any of the preceding claims, **characterised in that** there is provided on the vehicle contact unit (340) and/or the load carrier contact unit (370) a seal assembly (410) for sealing the vehicle contacts (341) and the load carrier contacts (371) when the vehicle contact unit (340) and the load carrier contact unit (370) are in contact with one another, wherein the seal assembly (410) expediently includes an elastic seal, in particular a ring seal (412), fitted to an end face (347, 377) of the vehicle contact unit (340) and/or the load carrier contact unit (370), and/or a projection (411) for penetrating a sealing surface, in particular elastic, on the respective other component, and/or a seal holder (413)

13. Coupling according to any of the preceding claims or the preamble of claim 1, **characterised in that** the fastening means include a spring assembly (387) which biases the vehicle contact unit (340) and/or the load carrier contact unit (370) in the direction of the other respective contact unit (370, 340) and/or in the direction of a centre position across the insertion axis (20), and/or that at least one contact unit (370, 340) has a polygonal outer peripheral contour for anti-twist-locked fastening to a polygonal inner peripheral contour of an interior of the plug-in socket (17a-17d, 17k) or the plug projection (63a-63d, 63k) matching the outer peripheral contour.

14. Load carrier (50a-50d, 50k) or motor vehicle or trailer coupling (280) with a coupling according to any of the preceding claims.

15. Contact unit (340, 370) for a coupling of a load carrier system or a trailer coupling (280) of a motor vehicle (200), wherein the coupling has a vehicle mounting (13a-13d, 13k) for attaching to a rear (201) of the motor vehicle (200) and a fastening arm (51a-51d, 51k) of a load carrier (50a-50d, 50k) or a trailer coupling (280) provided for attaching to the vehicle mounting (13a-13d, 13k), and plug means for attaching the fastening arm or arms (51a-51d, 51k) to the vehicle mounting or mountings (13a-13d, 13k) along an insertion axis (20), wherein the plug means comprise a plug-in socket (17a-17d, 17k) and a plug projection (63a-63d, 63k) on which are provided the contact unit (340, 370) comprising the vehicle contacts (341) or load carrier contacts (371) for creating an electrical and/or optical connection between the motor vehicle (200) and the load carrier or the trailer coupling (280), in particular a coupling arm of the trailer coupling (280), **characterised in that** it has fastening means for attaching the vehicle contacts (341) to the vehicle mounting (13a-13d, 13k) or to the fastening arm (51a-51d, 51k) with play along or across the insertion axis (20), and/or a polygonal outer peripheral contour for anti-twist-locked fastening to a polygonal inner peripheral contour of an interior of the plug-in socket (17a-17d, 17k) or the plug projection (63a-63d, 63k) matching the outer peripheral contour.

## Revendications

1. Dispositif de couplage pour un système de support de charges destiné à un véhicule automobile (200), comprenant un système d'attache au véhicule (13a - 13d, 13k) destiné à être fixé au niveau de la partie arrière (201) du véhicule automobile (200) et comprenant un bras de fixation (51a - 51d, 51 k), prévu aux fins de la fixation au niveau du système d'attache au véhicule (13a- 13d, 13k), d'un support de charges (50a - 50d, 50k), qui présente une zone porteuse servant à supporter une charge, de laquelle le bras de fixation (51a - 51d, 51k) destiné à la fixation au niveau du système d'attache au véhicule (13a - 13d, 13k) fait saillie, sachant que sont prévus, au niveau du système d'attache au véhicule (13a - 13d, 13k) au moins au nombre de un et au niveau du bras de fixation (51a - 51d, 51k) au moins au nombre de un, des moyens d'emboîtement servant à emboîter le bras de fixation (51a - 51d, 51k) au moins au nombre de un au niveau du système d'attache au véhicule (13a - 13d, 13k) au moins au nombre de un le long d'un axe d'emboîtement (20), sachant que les moyens d'emboîtement comprennent un logement d'emboîtement (17a - 17d, 17k) et une partie saillante d'emboîtement (63a - 63d, 63k), au niveau desquels sont prévues une unité de contact de véhicule (340) du système d'attache au véhicule (13a - 13d, 13k) comprenant des contacts de véhicule (341) et une unité de contact de support de charges (370) du support de charges comprenant des contacts de support de charges (371) afin d'établir une liaison électrique et/ou optique entre le véhicule automobile (200) et le support de charges, **caractérisé en ce que** ledit système de couplage présente des moyens de fixation servant à fixer les contacts de véhicule (341) au niveau du système d'attache au véhicule (13a - 13d, 13k) et/ou servant à fixer les contacts de support de charges (371) au niveau du bras de fixation (51a - 51d, 51k) avec un certain jeu le long de l'axe d'emboîtement (20) et/ou de manière transversale par rapport à ce dernier.

2. Dispositif de couplage selon la revendication 1, **caractérisé en ce que** les contacts de véhicule (341) de l'unité de contact de véhicule (340) et/ou les contacts de support de charges (371) de l'unité de contact de support de charges (370) sont disposés au niveau d'un support de contact (343 ; 373) et/ou dans un boîtier (349).

3. Dispositif de couplage selon la revendication 2, **caractérisé en ce que** les contacts sont maintenus ou logés au niveau du support de contact (343 ; 373) ou dans le boîtier (349) avec au moins une partie du jeu le long de l'axe d'emboîtement (20) et/ou de manière transversale par rapport à ce dernier, et/ou **en ce que** les contacts de véhicule (341) ou les contacts de support de charges (371) sont disposés au niveau du support de contact (343 ; 373), et **en ce que** le support de contact (343 ; 373) est maintenu ou logé dans le boîtier (349) avec au moins une partie du jeu le long de l'axe d'emboîtement (20) et/ou de manière transversale par rapport à ce dernier, et/ou de manière à empêcher toute rotation, sachant que le support de contact (343 ; 373) présente de manière appropriée un contour polygonal de périphérie extérieure, qui est adapté au contour polygonal de périphérie intérieure d'un logement du boîtier (349) pour le support de contact (343 ; 373).

4. Dispositif de couplage selon l'une quelconque des revendications 2 ou 3, **caractérisé en ce que** le support de contact (343 ; 373) ou le boîtier (349) présente un couvercle (350), lequel est traversé de part en part par des lignes menant aux contacts de véhicule (341) ou aux contacts de support de charges (371), sachant que le couvercle (350) est enclenché de manière appropriée avec le support de contact (343 ; 373) ou avec le boîtier (349), en particulier au moyen d'une butée d'encliquetage (357), qui repose au niveau du couvercle (350), au niveau d'un côté arrière de ce dernier opposé aux contacts et de laquelle au moins un crochet d'encliquetage fait saillie en particulier jusqu'à un côté avant du couvercle (350) venant ainsi en prise avec le support de contact (343 ; 373) ou avec le boîtier (349).

5. Dispositif de couplage selon l'une quelconque des revendications précédentes, **caractérisé en ce que** l'unité de contact de véhicule (340) et l'unité de contact de support de charges (370) sont disposées dans un espace intérieur du logement d'emboîtement (17a - 17d, 17k) et dans un espace intérieur de la partie saillante d'emboîtement (63a - 63d, 63k), et/ou **en ce que** les moyens de fixation comprennent au moins une partie saillante de maintien (389), qui dépasse dans l'espace intérieur respectif d'une paroi du logement d'emboîtement ou de la partie saillante d'emboîtement et qui vient en prise avec un logement de maintien (390) de l'unité de contact de véhicule (340) ou de l'unité de contact de support de charges (370) avec un jeu le long de l'axe d'emboîtement (20) et/ou de manière transversale par rapport à ce dernier, sachant que la partie saillante de maintien (389) comprend de manière avantageuse une vis ou un goujon d'emboîtement, qui traverse la paroi du logement d'emboîtement ou de la partie saillante d'emboîtement, sachant que la partie saillante de maintien (389) est immobilisée de manière avantageuse par des moyens de fixation, par exemple par de la colle, de la laque ou similaire, de manière stationnaire au niveau de la paroi du logement d'emboîtement ou de la partie saillante d'emboîtement.

6. Dispositif de couplage selon l'une quelconque des revendications précédentes, **caractérisé en ce que** le logement d'emboîtement (17a - 17d, 17k) et/ou la partie saillante d'emboîtement (63a - 63d, 63k) comprennent une section tubulaire (312 ; 315), et **en ce que** l'unité de contact de véhicule (340) et/ou l'unité de contact de support de charges (370) reposent de manière à assurer l'étanchéité au niveau d'une périphérie intérieure de la section tubulaire (312 ; 315) respective, obturent la section tubulaire (312 ; 315) dans la section transversale, en particulier côté frontal et/ou sont pourvues d'un ensemble de joints d'étanchéité ou d'un joint d'étanchéité (363, 383), en particulier d'un joint d'étanchéité annulaire, qui repose au niveau de la périphérie intérieure de la section tubulaire (312 ; 315) respective.

7. Dispositif de couplage selon l'une quelconque des revendications précédentes, **caractérisé en ce que** les moyens de fixation présentent au moins une surface de friction configurée en particulier sous la forme d'un joint d'étanchéité (363, 383) ou disposée au niveau d'un joint d'étanchéité (363, 383), servant au maintien par friction de l'unité de contact de véhicule (340) au niveau du système d'attache au véhicule (13a - 13d, 13k) ou servant au maintien par friction de l'unité de contact de support de charges (370) au niveau du bras de fixation (51a - 51d, 51k), en particulier dans le logement d'emboîtement (17a - 17d, 17k) ou dans la partie saillante d'emboîtement (63a - 63d, 63k), avec un jeu le long de l'axe d'emboîtement (20) et/ou de manière transversale par rapport à ce dernier.

8. Dispositif de couplage selon l'une quelconque des revendications précédentes, **caractérisé en ce que** les contacts de véhicule (341), en particulier l'unité de contact de véhicule (340), et/ou les contacts de support de charges, en particulier l'unité de contact de support de charges (370), sont logés dans un corps élastique comprenant en particulier un joint d'étanchéité (363, 383), dans le logement d'emboîtement (17a - 17d, 17k) ou dans la partie saillante d'emboîtement (63a - 63d, 63k), avec un jeu le long de l'axe d'emboîtement (20) et/ou de manière transversale par rapport à ce dernier.

9. Dispositif de couplage selon l'une quelconque des revendications précédentes, **caractérisé en ce que** les moyens de fixation comprennent des moyens de serrage servant à serrer l'unité de contact de véhicule (340) au niveau du système d'attache au véhicule (13a - 13d, 13k) et/ou servant à serrer l'unité de contact de support de charges (370) au bras de fixation (51a - 51d, 51k), en particulier dans le logement d'emboîtement (17a - 17d, 17k) ou dans la partie saillante d'emboîtement (63a - 63d, 63k), avec un jeu le long de l'axe d'emboîtement (20) et/ou de manière transversale par rapport à ce dernier, sachant que les moyens de serrage comprennent de préférence au moins une partie saillante de serrage, qui sollicite un joint d'étanchéité (363, 383) disposé au niveau de la périphérie extérieure de l'unité de contact de véhicule (340) ou de l'unité de contact de support de charges (370) ou une face étanche en direction d'une périphérie intérieure du logement d'emboîtement (17a - 17d, 17k) ou de la partie saillante d'emboîtement (63a - 63d, 63k), et/ou en ce que les moyens de fixation comprennent des moyens d'encliquetage servant à encliqueter l'unité de contact de véhicule (340) au niveau du système d'attache au véhicule (13a - 13d, 13k) et/ou servant à encliqueter l'unité de contact de support de charges (370) au bras de fixation (51a - 51d, 51k), en particulier dans le logement d'emboîtement (17a - 17d, 17k) ou dans la partie saillante d'emboîtement (63a - 63d, 63k), avec un jeu le long de l'axe d'emboîtement (20) et/ou de manière transversale par rapport à ce dernier, sachant que les moyens d'encliquetage comprennent de manière avantageuse une partie saillante d'encliquetage (393) prévue côté intérieur au niveau du logement d'emboîtement (17a - 17d, 17k) ou côté intérieur au niveau de la partie saillante d'emboîtement (63a - 63d, 63k) ou un logement d'encliquetage (394) destiné à être encliqueté avec un logement d'encliquetage (394) ou une partie saillante d'encliquetage (393) au niveau de l'unité de contact de véhicule (340) ou au niveau de l'unité de contact de support de charges (370).

10. Dispositif de couplage selon l'une quelconque des revendications précédentes, **caractérisé en ce qu'**il présente des moyens de guidage (400) servant à guider l'unité de contact de véhicule (340) et/ou l'unité de contact de support de charges (370) lors de l'emboîtement du bras de fixation (51a - 51d, 51 k) au niveau du système d'attache au véhicule (13a - 13d, 13k) ou dans ce dernier, sachant que les moyens de guidage (400) comprennent de manière appropriée au moins une nervure de glissement (401) et/ou au moins une partie saillante de guidage (402).

11. Dispositif de couplage selon la revendication 10, **caractérisé en ce que** la nervure de glissement (401) au moins au nombre de une et la partie saillante de guidage (402) au moins au nombre de une sont disposées au niveau d'une périphérie extérieure de l'unité de contact de véhicule (340) et/ou de l'unité de contact de support de charges (370) ou d'un boîtier (349, 379) ou d'un support de contact (343b, 373b), et **en ce que** la nervure de glissement (401) au moins au nombre de une ou la partie saillante de guidage (402) au moins au nombre de une s'appuient au niveau du bras de fixation (51a - 51d, 51 k) ou au niveau du système d'attache au véhicule (13a - 13d, 13k), lorsque ces dernières sont emboîtées l'une dans l'autre, et/ou **en ce que** la partie saillante de guidage (402) au moins au nombre de une ou la nervure de glissement (401) au moins au nombre de une dépassent d'un corps de base, en particulier d'un boîtier, de l'unité de contact de véhicule (340) et/ou de l'unité de contact de support de charges (370) et rapprochent en un certain sens l'unité de contact de véhicule (340) et l'unité de contact de support de charges (370) lorsque le bras de fixation (51a - 51d, 51k) et le système d'attache au véhicule (13a - 13d, 13k) sont emboîtés l'un dans l'autre, en particulier au sens d'un centrage.

12. Dispositif de couplage selon l'une quelconque des revendications précédentes, **caractérisé en ce qu'**un ensemble de joints d'étanchéité (410) servant à étanchéifier les contacts de véhicule (341) et les contacts de support de charges (371) est disposé au niveau de l'unité de contact de véhicule (340) et/ou au niveau de l'unité de contact de support de charges (370), lorsque l'unité de contact de véhicule (340) et l'unité de contact de support de charges (370) sont en contact l'une avec l'autre, sachant que l'ensemble de joints d'étanchéité (410) comprend de manière appropriée un joint d'étanchéité élastique, en particulier un joint d'étanchéité annulaire (412), disposé au niveau d'un côté frontal (347, 377) de l'unité de contact de véhicule (340) et/ou de l'unité de contact de support de charges (370), et/ou une partie saillante (411) destinée à pénétrer dans une face étanche en particulier élastique, au niveau de l'autre élément respectivement et/ou dans un logement d'étanchéité (413).

13. Dispositif de couplage selon l'une quelconque des revendications précédentes ou selon le préambule de la revendication 1, **caractérisé en ce que** les moyens de fixation comprennent un ensemble de ressorts (387), qui sollicite l'unité de contact de véhicule (340) et/ou l'unité de contact de support de charges (370) en direction de l'autre unité de contact (370, 340) respective et/ou en direction d'une position centrale de manière transversale par rapport à l'axe d'emboîtement (20), et/ou **en ce qu'**au moins une unité de contact (340, 370) présente un contour polygonal de périphérie extérieure destiné à être fixé tout en empêchant toute rotation au niveau d'un contour polygonal de périphérie intérieure, adapté au contour de périphérie extérieure, d'une espace intérieur du logement d'emboîtement (17a - 17d, 17k) ou de la partie saillante d'emboîtement (63a -63d, 63k).

14. Support de charges (50a - 50d, 50k) ou véhicule automobile ou attelage de remorque (280) comprenant un dispositif de couplage selon l'une quelconque des revendications précédentes.

15. Unité de contact (340, 370) pour un dispositif de couplage d'un système de support de charges ou d'un attelage de remorque (280) d'un véhicule automobile (200), sachant que le dispositif de couplage présente un système d'attache au véhicule (13a - 13d, 13k) destiné à être fixé au niveau d'une partie arrière (201) du véhicule automobile (200) et un bras de fixation (51a - 51d, 51k), prévu aux fins de la fixation au niveau du système d'attache au véhicule (13a - 13d, 13k), d'un support de charges (50a - 50d, 50k) ou d'un attelage de remorque (280), et en ce que sont prévus des moyens d'emboîtement servant à emboîter le bras de fixation (51a - 51d, 51k) au moins au nombre de un au niveau du système d'attache au véhicule (13a - 13d, 13k) au moins au nombre de un le long d'un axe d'emboîtement (20), sachant que les moyens d'emboîtement comprennent un logement d'emboîtement (17a - 17d, 17k) et une partie saillante d'emboîtement (63a - 63d, 63k), au niveau desquels est prévue l'unité de contact (340, 370) comprenant des contacts de véhicule (341) ou des contacts de support de charges (371) afin d'établir une liaison électrique et/ou optique entre le véhicule automobile (200) et le support de charges ou l'attelage de remorque (280), en particulier un bras d'attelage de l'attelage de remorque (280), **caractérisée en ce que** ladite unité de contact présente des moyens de fixation servant à fixer les contacts de véhicule (341) au niveau du système d'attache au véhicule (13a - 13d, 13k) ou au niveau du bras de fixation (51a - 51d, 51k), avec un jeu le long de l'axe d'emboîtement (20) et/ou de manière transversale par rapport à ce dernier, et/ou un contour polygonal de périphérie extérieure destiné à être fixé de manière à empêcher toute rotation au niveau d'un contour polygonal de périphérie intérieure, adapté au contour de périphérie extérieure, d'un espace intérieur du logement d'emboîtement (17a - 17d, 17k) ou de la partie saillante d'emboîtement (63a - 63d, 63k).
